# EUROPÄISCHE PATENTSCHRIFT

(11) **EP 3 566 856 B1**
(45) Veröffentlichungstag und Bekanntmachung des Hinweises auf die Patenterteilung: **24.08.2022**
(21) Anmeldenummer: 19168745.8
(22) Anmeldetag: 11.04.2019
(51) Int. Cl.: B29C 64/393, B29C 64/153, B33Y 50/02, B33Y 30/00, B33Y 10/00, B22F 10/20, B22F 10/30

(54) **VERFAHREN UND VORRICHTUNG ZUR VERBESSERUNG DER BAUTEILHOMOGENITÄT VON DURCH EIN ADDITIVES HERSTELLVERFAHREN HERGESTELLTEN OBJEKTEN**
METHOD AND DEVICE FOR IMPROVING COMPONENT HOMOGENEITY OF OBJECTS MADE USING AN ADDITIVE PRODUCTION METHOD
PROCÉDÉ ET DISPOSITIF D'AMÉLIORATION DE L'HOMOGÉNÉITÉ DE COMPOSANT D'OBJETS FABRIQUÉS SELON UN PROCÉDÉ DE FABRICATION ADDITIVE

(30) Priorität: 13.04.2018 DE 102018205689
(43) Veröffentlichungstag der Anmeldung: 13.11.2019
(73) Patentinhaber: EOS GmbH Electro Optical Systems, 82152 Krailling (DE)
(72) Erfinder: HAMANN, Jörg, 85053 Ingolstadt (DE); HÜMMELER, Ludger, 82131 Gauting (DE); WALTER, Manuel, 80686 München (DE)
(74) Vertreter: Prüfer & Partner mbB Patentanwälte · Rechtsanwälte

(56) Entgegenhaltungen:
- EP-A1- 0 724 494
- EP-A1- 2 667 987
- DE-A1-102011 087 374
- US-A- 6 085 122
- US-A1- 2017 144 253
- US-A1- 2017 320 168
- Ho Yeung ET AL: "LASER PATH PLANNING AND POWER CONTROL STRATEGIES FOR POWDER BED FUSION SYSTEMS Measurement Science for Additive Manufacturing View project Sensor-Based Build Condition Monitoring in Laser Powder Bed Fusion Additive Manufacturing Process Using a Spectral Graph Theoretic Approach View project", , 1. August 2016 (2016-08-01), XP055492295, Gefunden im Internet: URL:https://www.researchgate.net/profile/B randon_Lane/publication/310152847_LASER_PA TH_PLANNING_AND_POWER_CONTROL_STRATEGIES_F OR_POWDER_BED_FUSION_SYSTEMS/links/5829bb6 108ae911e2a32701b/LASER-PATH-PLANNING-AND- POWER-CONTROL-STRATEGIES-FOR-POWDER-BED-FU SION-SYSTEMS.pdf?origin=publication_detail [gefunden am 2018-07-12]

## Beschreibung

Die vorliegende Anmeldung betrifft ein Verfahren und eine Vorrichtung zur Bereitstellung von Steuerdaten für eine additive Herstellvorrichtung, ein entsprechend angepasstes additives Herstellverfahren, eine entsprechende Vorrichtung zur Ansteuerung von Energieeintragseinrichtungen einer additiven Herstellvorrichtung, eine entsprechend angepasste additive Herstellvorrichtung und ein entsprechend angepasstes Computerprogramm.

In dem Artikel H. Yeung ET AL.: "LASER PATH PLANNING AND POWER CONTROL STRATEGIES FOR POWDER BED FUSION SYSTEMS, in: Proceedings of the 27th Annual International Freeform Fabrication Symposium, 2016, werden Strategien zur Steuerung des Laserpfads and und der Laserleistung beschreiben. Dabei wird die Laser- und Scannerdynamik berücksichtigt und in Tests mit dem tatsächlich gemessenen dynamischen Systemverhalten verglichen. Das Ziel ist eine Steuerung der Laserleistung basieren auf einer Schmelzbadanalyse mit einer Ansteuerrate von 100 kHz. Additive Herstellvorrichtungen und zugehörige Verfahren sind allgemein dadurch charakterisiert, dass in ihnen Objekte durch Verfestigen eines formlosen Aufbaumaterials Schicht für Schicht hergestellt werden. Die Verfestigung kann beispielsweise durch Zufuhr von Wärmeenergie zum Aufbaumaterial mittels Bestrahlens desselben mit elektromagnetischer Strahlung oder Teilchenstrahlung (z.B. Lasersintern (SLS oder DMLS) oder Laserschmelzen oder Elektronenstrahlschmelzen) herbeigeführt werden. Beispielsweise beim Lasersintern oder Laserschmelzen wird der Einwirkbereich eines Laserstrahls auf eine Schicht des Aufbaumaterials über jene Stellen der Schicht bewegt, die dem Objektquerschnitt des herzustellenden Objekts in dieser Schicht entsprechen.

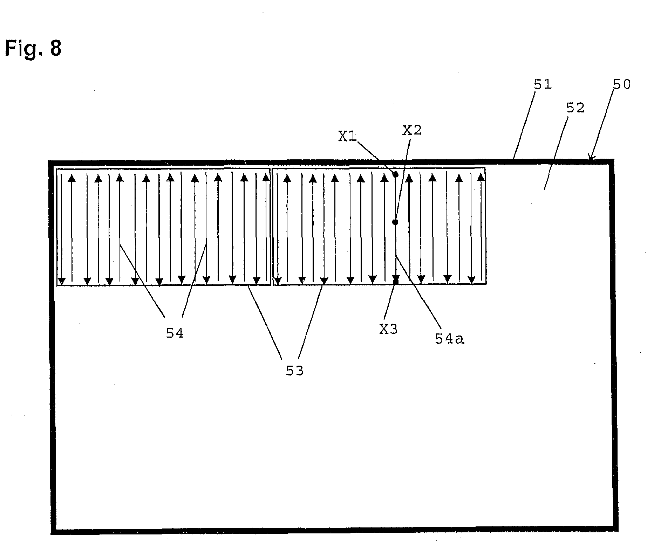

Üblicherweise wird dabei, wie in Fig. 8 gezeigt, ein Objektquerschnitt 50 in einen Innenbereich bzw. Kernbereich 52 und einen Konturbereich 51 unterteilt, wobei in der Regel dem Konturbereich 51 andere Parameter für den Energieeintrag in das Aufbaumaterial zugewiesen werden als dem Innenbereich 52. Beispielsweise wird der Konturbereich 51 mit einem Laserstrahl als Beispiel für elektromagnetische Strahlung dergestalt abgetastet, dass der Einwirkbereich des Laserstrahls entlang des Verlaufs der Kontur verfahren wird. Der Innenbereich 52 wird üblicherweise dergestalt verfestigt, dass der Innenbereich 52 in Teilbereiche 53 unterteilt wird, die üblicherweise eine annähernd rechteckige oder quadratische Gestalt haben. Der Innenbereich 52 wird dann Teilbereich für Teilbereich mit dem Laserstrahl abgetastet.

Wie in Fig. 8 gezeigt, wird in jedem Teilbereich 53 der Laserstrahl in parallelen Bahnen (Scanlinien) 54 über das Aufbaumaterial bewegt, woraus ein schraffurartiges Bewegungsmuster beim Abtasten jedes Teilbereichs 53 mit dem Laserstrahl resultiert. In Fig. 8 ist dabei die Bewegungsrichtung des Laserstrahls durch Pfeile veranschaulicht. Man erkennt, dass die Bewegungsrichtungen für benachbarte Scanlinien 54 einander entgegengesetzt sind.

Die Steuerdatei zum Ansteuern des Laserstrahls für eine Bewegung desselben über das Aufbaumaterial spezifiziert beispielsweise nacheinander die Koordinaten von Zielpunkten in der Arbeitsebene einer Lasersinter- oder -schmelzvorrichtung, zu denen der Einwirkbereich des Laserstrahls jeweils ausgehend von einer vorhandenen Position bewegt werden soll, wobei während der Bewegung dem Aufbaumaterial Laserstrahlung zugeführt wird. Für die Bewegung des Laserstrahls entlang der Scanlinie 54a in Fig. 8 würden beispielsweise in der Steuerdatei nacheinander die Positionen X1, X2 und X3 angegeben sein:
(X1, v1, ...)
(X2, v2, ...)
(X3, v3, ...)

In dem Beispiel ist neben der Angabe der Koordinaten des Zielpunktes Xi ebenfalls auch die Geschwindigkeit vi angegeben, mit welcher der Einwirkbereich des Laserstrahls zum jeweiligen Zielpunkt über das Aufbaumaterial, genauer gesagt, die Arbeitsebene der Lasersinter- bzw. -schmelzvorrichtung bewegt werden soll. Falls sich während der Abtastung der zu verfestigenden Stellen des Aufbaumaterials die Bewegungsgeschwindigkeit des Einwirkbereichs nicht ändert, wird die Bewegungsgeschwindigkeit oftmals nicht explizit spezifiziert. Alternativ könnte auch anstelle der Bewegungsgeschwindigkeit vi für jeden Zielpunkt mit den Koordinaten Xi ein Zeitpunkt ti angegeben werden, zu dem der Einwirkbereich des Laserstrahls an dem Zielpunkt angelangen soll. Ein entsprechendes Beispiel für eine Steuerdatei hätte also den folgenden Aufbau:
(X1, t1, ...)
(X2, t2, ...)
(X3, t3, ...)

Obwohl für den Erhalt von homogenen gleichförmigen Bauteilen in der Regel in der soeben geschilderten Weise vorgegangen wird, haben die Erfinder festgestellt, dass es bei dem geschilderten Vorgehen dennoch zu Bauteilinhomogenitäten, insbesondere an der Kontur 51 des Objekts im Bereich von Ecken und Kanten kommen kann.

Die Aufgabe der vorliegenden Erfindung besteht daher darin, ein Verfahren und eine Vorrichtung bereitzustellen, mittels derer die Bauteilhomogenität von durch ein additives Herstellverfahren hergestellten Objekten verbessert werden kann.

Die Aufgabe wird gelöst durch ein computergestütztes Verfahren nach Anspruch 1, ein additives Herstellverfahren nach Anspruch 10, eine Vorrichtung zur Bereitstellung von Steuerdaten nach Anspruch 11, eine Vorrichtung nach Anspruch 12, eine additive Herstellvorrichtung nach Anspruch 13 und ein Computerprogramm nach Anspruch 14. Weiterbildungen der Erfindung werden in den abhängigen Ansprüchen beansprucht. Insbesondere kann eine erfindungsgemäße Vorrichtung auch durch untenstehende bzw. in den abhängigen Ansprüchen ausgeführte Merkmale der erfindungsgemäßen Verfahren weitergebildet sein und umgekehrt. Ferner können die im Zusammenhang mit einer erfindungsgemäßen Vorrichtung beschriebenen Merkmale auch zur Weiterbildung einer anderen erfindungsgemäßen Vorrichtung benutzt werden, selbst wenn dies nicht explizit angegeben wird.

Ein erfindungsgemäßes computergestütztes Verfahren zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparameterwerten entlang einer Anzahl von Verfestigungsbahnen abgetastet werden,
weist auf:
einen ersten Schritt des Zugriffs auf computerbasierte Modelldaten zumindest eines Abschnitts des herzustellenden Objekts,
einen zweiten Schritt des Erzeugens zumindest eines Datenmodells eines zur Herstellung des zumindest einen Objektabschnitts selektiv zu verfestigenden Bereichs einer Aufbaumaterialschicht, wobei in dem Datenmodell ein Verfestigen des Aufbaumaterials durch ein Bewegen zumindest eines Strahlungseinwirkbereichs entlang zumindest einer Verfestigungsbahn spezifiziert ist,
wobei spezifiziert wird, dass während einer Änderung eines Geschwindigkeitsvektors der Bewegung eines Strahlungseinwirkbereichs auf dem Aufbaumaterial entlang der Verfestigungsbahn eine zumindest einmalige Abänderung zumindest eines Wertes eines Energieeintragsparameters aus dem Satz von Energieeintragsparameterwerten erfolgt, und
einen dritten Schritt, in dem Steuerdaten entsprechend dem im zweiten Schritt erzeugten zumindest einen Datenmodell für die Generierung eines Steuerdatensatzes für die additive Herstellvorrichtung bereitgestellt werden.

Additive Herstellvorrichtungen und -verfahren, auf die sich die vorliegende Erfindung bezieht, sind insbesondere solche, bei denen Energie als elektromagnetische Strahlung oder Teilchenstrahlung selektiv einer Schicht des Aufbaumaterials zugeführt wird. Die Arbeitsebene ist dabei eine Ebene, in der die Oberseite der Schicht liegt, welcher die Energie zugeführt wird. Hierbei kann die Energieeintragseinrichtung beispielsweise einen Laser oder eine Elektronenstrahlquelle aufweisen. Insbesondere bezieht sich die Erfindung auf Verfahren und Vorrichtungen, bei denen dem Aufbaumaterial mittels Strahlung Wärme zugeführt wird, wie z.B. das Lasersintern oder Laserschmelzen bzw. Elektronenstrahlschmelzen.

Von besonderem Vorteil ist eine Anwendung der Erfindung in Zusammenhang mit additiven Herstellverfahren und -vorrichtungen, bei denen ein metallenes oder zumindest metallhaltiges Aufbaumaterial verwendet wird, beispielsweise ein Metallpulver oder Metalllegierungspulver.

Es sei an dieser Stelle auch bemerkt, dass mittels einer erfindungsgemäßen additiven Herstellvorrichtung nicht nur ein Objekt, sondern auch mehrere Objekte gleichzeitig hergestellt werden können. Wenn in der vorliegenden Anmeldung von der Herstellung eines Objekts die Rede ist, dann versteht es sich, dass die jeweilige Beschreibung in gleicher Weise auch auf additive Herstellverfahren und -vorrichtungen anwendbar ist, bei denen mehrere Objekte gleichzeitig hergestellt werden.

Als Steuerdatensatz (oft auch als Steuerbefehlssatz bezeichnet) wird hier eine Abfolge von Anweisungen angesehen, Schichten des Aufbaumaterials nacheinander aufzutragen und Bereiche der jeweiligen Schichten, die dem Querschnitt eines herzustellenden Objektes entsprechen, mit Strahlung abzutasten, um das Aufbaumaterial zu verfestigen.

Im Detail basiert ein Steuerdatensatz auf einem computerbasierten Modell des oder der herzustellenden Objekte, bevorzugt einem CAD-Modell. Der Steuerdatensatz legt für jede Schicht während der Herstellung die Stellen, an denen durch Strahlungszufuhr eine Verfestigung des Aufbaumaterials bewirkt werden soll, fest und optional die Dicke der Schicht. Des Weiteren enthält ein Steuerdatensatz oftmals auch herstellvorrichtungsspezifische Informationen, beispielsweise bezüglich der Lage und Orientierung der Objekte in der additiven Herstellvorrichtung oder aber bezüglich eines Durchmessers eines Strahlungseinwirkbereichs eines Strahl(bündel)s beim Auftreffen auf das Aufbaumaterial. In der Regel enthält der Steuerdatensatz dabei alle zur Steuerung der Energieeintragseinrichtung erforderlichen Daten, wodurch u.a. die Energiedichte der Strahlung, also die Energie pro Flächeneinheit, und/oder die Verfahrgeschwindigkeit des Strahlungseinwirkbereichs über das Aufbaumaterial und/oder ein Bewegungsmuster festgelegt werden. Hier wird der Begriff "Strahlbündel" anstelle von "Strahl" verwendet, um zum Ausdruck zu bringen, dass der Durchmesser des Strahlungseinwirkbereichs auf dem Aufbaumaterial nicht notwendigerweise sehr klein sein muss, sondern auch eine größere Fläche einnehmen kann, insbesondere wenn die Strahlung schräg auf das Aufbaumaterial auftrifft oder aber Strahlung verwendet wird, die beim Auftreffen auf das Aufbaumaterial bewusst einen größeren Flächenbereich abdecken soll (beispielsweise wenn ein Zeilenbelichter zum Einsatz kommt). Bei einer Bewegung des zugehörigen Strahlungseinwirkbereichs zu einer zu verfestigenden Stelle wird im allgemeinen das Strahlbündel so bewegt, dass die ungefähre Mitte des Strahlungsauftreffbereichs an der Stelle anlangt. Bevorzugt ändert dabei der Strahlungseinwirkbereich während der Bewegung nicht seine Gestalt.

Der Steuerdatensatz kann somit als Gesamtheit aller für die Steuerung des Herstellungsvorgangs in einer additiven Herstellvorrichtung vorgegebenen Steuerdaten angesehen werden. Die auf eine einzelne Schicht bezogenen Steuerdaten werden dabei im Folgenden auch als Schichtdatensatz bezeichnet. In der vorliegenden Anmeldung wird insbesondere angenommen, dass ein Schichtdatensatz ein Datenmodell von während des Herstellungsverfahrens zu verfestigenden Stellen eines Objektquerschnitts enthält. Solch ein Datenmodell wird in der Regel durch Zerlegen eines CAD-Modells des herzustellenden Objekts in Schichten (im Fachjargon als Slicing bezeichnet) erzeugt. Es ist aber auch denkbar, eine zweidimensionale Repräsentation des in einer Schicht mittels eines oder mehrerer Strahlenbündel zu verfestigenden Objektquerschnitts auf anderweitige Weise aus dem computerbasierten CAD-Modell des Objekts zu extrahieren. In dem Schichtdatensatz sind einem Objektquerschnitt entsprechende Stellen, die in der zugehörigen Aufbaumaterialschicht zu verfestigen sind, spezifiziert. Darüber hinaus können noch weitere Informationen hinsichtlich der Herstellung des Objektquerschnitts enthalten sein, insbesondere die zeitliche Reihenfolge, in der einem Objektquerschnitt entsprechende Stellen zu verfestigen sind, also eine Scanlinie bzw. eine Abtastspur, entlang derer verfestigt werden soll, oder z. B. die Schichtdicke oder Bestrahlungsparameterwerte, wie beispielsweise der Durchmesser oder die Verfahrgeschwindigkeit eines Strahlungseinwirkbereichs eines auf das Aufbaumaterial auftreffenden Strahlbündels, etc. Es sei betont, dass es auch Sonderfälle gibt, in denen sich ein Schichtdatensatz nicht auf einen kompletten Objektquerschnitt bezieht, sondern nur auf einen Teil desselben.

Bei den computerbasierten Modelldaten kann es sich beispielsweise um ein Modell des herzustellenden Objektabschnitts handeln, das z. B. als CAD-Modell oder konvertiert in das STL-Format vorliegt, und noch keine Informationen über die Zerlegung in Schichten für eine schichtweise Herstellung enthält. Denkbar ist auch ein Vorliegen der Modelldaten in einer GML (Generative Modelling Language)-Beschreibung. Alternativ kann es sich auch um eine Anzahl von Schichtdatensätzen handeln, von denen jeder ein Datenmodell eines während der Herstellung selektiv zu verfestigenden Bereichs einer Aufbaumaterialschicht aufweist, der einem Querschnitt des Objektabschnitts entspricht. An dieser Stelle sei vermerkt, dass in der vorliegenden Anmeldung der Begriff "Anzahl" stets im Sinne von "ein oder mehrere" zu verstehen ist. Ferner sei bemerkt, dass der Objektabschnitt sich nicht notwendigerweise nur auf einen Teil des herzustellenden Objekts beziehen muss, sondern auch das ganze herzustellende Objekt umfassen kann.

Ein Zugriff auf die Modelldaten kann so aussehen, dass die Modelldaten aus einem Speicher ausgelesen werden oder aber über ein Netzwerk entgegengenommen werden. Dabei müssen die Modelldaten des gesamten Objektabschnitts nicht zwangsläufig auf einmal eingelesen werden. Es ist auch möglich, dass es einen größeren zeitlichen Abstand zwischen den Zugriffsvorgängen auf Teile der Modelldaten gibt, beispielsweise Teile der Modelldaten jeweils bei Bedarf während eines Herstellungsvorgangs des Objektabschnitts aus einem Speicher (auf den z.B. auch von Seiten der additiven Herstellvorrichtung aus zugegriffen werden kann) oder über ein Netzwerk eingelesen werden und ein erzeugtes Datenmodell dann während des Herstellungsvorgangs in den Steuerdatensatz integriert wird. Eine additive Herstellvorrrichtung kann also unter Zugrundelegung des erfindungsgemäßen Verfahrens den Steuerdatensatz für ihre Ansteuerung selbst abändern. Im Extremfall könnte dabei sogar auf Modelldaten zugegriffen werden, in denen nicht eine Mehrzahl von zu verfestigenden Stellen spezifiziert ist, sondern nur die während eines gerade ablaufenden Herstellvorgangs als nächstes zu verfestigende Stelle. Es würde dann anhand einer Analyse dieser Modelldaten eine Abänderung des Geschwindigkeitsvektors erkannt, zumindest ein Wert eines Energieeintragsparameters abgeändert und die als nächstes zu verfestigende Stelle mit dem abgeänderten Wert des zumindest einen Energieeintragsparameters verfestigt, was der Erzeugung eines Datenmodells gemäß dem zweiten Schritt und der Generierung eines entsprechenden Steuerdatensatzes gemäß dem dritten Schritt gleich kommt.

Wenn die Modelldaten, auf die im ersten Schritt zugegriffen wird, bereits eine Anzahl von Schichtdatensätzen aufweisen, dann kann die Erzeugung zumindest eines Datenmodells im zweiten Schritt in der Abänderung eines bereits in den Modelldaten vorhandenen Datenmodells einer Aufbaumaterialschicht bestehen. Andernfalls kann ein Datenmodell einer Aufbaumaterialschicht (bzw. eines Teils davon) erstmalig im zweiten Schritt erzeugt werden.

Eine Verfestigungsbahn entspricht einer Strecke in der Arbeitsebene, entlang derer das Aufbaumaterial ohne zeitliche und örtliche Unterbrechungen, d. h. in einem Zug, oder, mit anderen Worten, durch kontinuierliche Verlagerung des Schmelzbades in einer Richtung parallel zur Arbeitsebene verfestigt werden soll. Insbesondere kann man also Verfestigungsbahnen als jene Scanlinien(abschnitte) ansehen, bei denen beim Abtasten des Aufbaumaterials durch das zumindest eine Strahlbündel tatsächlich eine Verfestigung des Aufbaumaterials (in dem zugeordneten Strahlungseinwirkbereich) und nicht lediglich eine Erwärmung desselben bewirkt wird. Eine Verfestigungsbahn kann z.B. eine gerade Strecke einer gewissen Breite sein, entlang derer durch das Abtasten mit einem Strahlungseinwirkbereich das Aufbaumaterial verfestigt wird. Es gibt aber auch Fälle, in denen beim Bewegen eines Strahlungseinwirkbereichs entlang der Verfestigungsbahn ein oder mehrere Richtungsänderungen stattfinden, insbesondere die Verfestigungsbahn geometrisch als gekrümmte Linie einer gewissen Breite vorliegt.

Beim Abtasten des Aufbaumaterials mit einem Strahlungseinwirkbereich wirkt in dem Strahlungseinwirkbereich die Strahlung so auf das Aufbaumaterial ein, dass eine Verfestigung zumindest einer obersten Schicht des Aufbaumaterials bewirkt wird. Dabei wird infolge der Energiezufuhr im Strahlungseinwirkbereich das Aufbaumaterial teilweise oder vollständig aufgeschmolzen, wodurch sich die Bestandteile des Aufbaumaterials (beispielsweise Pulverkörner) miteinander verbinden. Nach seiner Abkühlung liegt das Aufbaumaterial dann als Festkörper vor.

Es sei erwähnt, dass es Aufbaumaterialien, wie z.B. Legierungen, geben kann, für die kein eindeutiger Schmelzpunkt, sondern ein Schmelzintervall definiert ist. Im Prinzip kann man in solch einem Fall bereits bei einer Überschreitung der Solidustemperatur, also der unteren Grenze des Schmelzintervalls, von einem teilweisen Aufschmelzen sprechen. Bevorzugt lässt sich die vorliegende Erfindung aber auf Fälle anwenden, in denen das Aufbaumaterial vollständig aufgeschmolzen wird, also die Liquidustemperatur bzw. die obere Grenze des Schmelzintervalls überschritten wird.

Da die Übergänge zwischen teilweisem (bei Pulverkörnern also oberflächlichem) Aufschmelzen (Sintern) und vollständigem Aufschmelzen (Schmelzen) fließend sind, werden die Begriffe Sintern und Schmelzen in der vorliegenden Anmeldung synonym verwendet und nicht zwischen Sintern und Schmelzen unterschieden.

Ein Strahlungseinwirkbereich eines Strahlbündels auf dem Aufbaumaterial kann als Bereich der Arbeitsebene angesehen werden, innerhalb dessen die auftreffende Strahlungsleistung pro Flächeneinheit größer als ein vorgegebener Prozentsatz der maximalen Strahlungsleistung pro Flächeneinheit ist, wobei bei Überschreiten des vorgegebenen Prozentsatzes der maximalen Strahlungsleistung pro Flächeneinheit eine Überschreitung einer Schmelztemperatur bzw. Solidus- und/oder Liquidustemperatur des Aufbaumaterials bewirkt wird. Innerhalb des Strahlungseinwirkbereichs kann dabei z.B. ein Laserstrahl oder Teilchenstrahl auf das Aufbaumaterial einwirken. Der vorgegebene Prozentsatz bzw. die Gestalt und Größe des Strahlungseinwirkbereichs können entweder durch vorangegangene Herstellvorgänge mit der additiven Herstellvorrichtung und/oder mit dem Aufbaumaterial oder aber im Rahmen von Vorversuchen, bei denen Testbestrahlungen durchgeführt werden, ermittelt werden.

Ein Strahlungseinwirkbereich auf dem Aufbaumaterial muss nicht notwendigerweise kreisförmig sein, sondern kann auch andere, z.B. ovale, Formen haben, insbesondere wenn die Strahlung schräg auf das Aufbaumaterial auftrifft oder aber Strahlung verwendet wird, die beim Auftreffen auf das Aufbaumaterial bewusst einen größeren Flächenbereich abdecken soll (beispielsweise, wenn ein Zeilenbelichter zum Einsatz kommt). Insbesondere kann eine Strahlungsleistung pro Flächeneinheit innerhalb des Strahlungseinwirkbereichs bewusst variiert werden.

Wenn ein Strahlungseinwirkbereich entlang eines Abschnitts bewegt wird, der nicht gerade ist, so tritt in der Regel der Effekt auf, dass der Betrag des Geschwindigkeitsvektors innerhalb der Fläche des Strahlungseinwirkbereichs variiert. In diesem Fall kann z.B. beim zweiten Schritt die Bewegung eines bestimmten Punktes innerhalb des Strahlungseinwirkbereichs (z.B. des geometrischen Schwerpunkts) für die Abänderung eines Wertes eines Energieeintragsparameters herangezogen werden. Alternativ kann auch z.B. der über die Fläche des Strahlungseinwirkbereichs gemittelte Betrag des Geschwindigkeitsvektors herangezogen werden oder aber der heranzuziehende Betrag des Geschwindigkeitsvektors aus den Vorgaben für eine oder mehrere Strahlungsablenkvorrichtungen, durch welche die Strahlung auf die Arbeitsebene gerichtet wird, abgeleitet werden.

Eine erfindungsgemäße Abänderung zumindest eines Wertes eines Energieeintragsparameters kann insbesondere auch für den Zeitraum spezifiziert werden, in dem sich die Richtung des Geschwindigkeitsvektors der Bewegung eines Strahlungseinwirkbereichs ändert.

Bei einer alternativen Vorgehensweise wird im zweiten Schritt eine zumindest einmalige Abänderung zumindest eines Wertes eines Energieeintragsparameters nicht für den Zeitraum spezifiziert, in dem sich ein Geschwindigkeitsvektor der Bewegung eines Strahlungseinwirkbereichs ändert, sondern für den Zeitraum spezifiziert, in dem sich ein Geschwindigkeitsvektor der Bewegung eines Strahlungsauftreffbereichs ändert. Alle sich auf den Strahlungseinwirkbereich beziehenden Ausführungsweisen der Erfindung lassen sich in gleicher Weise in Bezug auf die Zugrundelegung der Bewegung eines Strahlungsauftreffbereichs umsetzen.

Ein Strahlungsauftreffbereich kann dabei als Bereich der Arbeitsebene angesehen werden, innerhalb dessen die auftreffende Strahlungsleistung pro Flächeneinheit größer als ein vorgegebener Prozentsatz der maximalen Strahlungsleistung pro Flächeneinheit, dort wo die Strahlung auf die Oberfläche der Aufbaumaterialschicht trifft, ist. Beispielsweise können jene Stellen, an denen nur mehr 1% der maximalen Strahlungsleistung pro Flächeneinheit auftrifft, als Grenze des Auftreffbereichs angesehen werden. Welcher Prozentsatz hier angesetzt wird, ist ohne Auswirkung auf den Gedanken der Erfindung. Insbesondere bei einem gaußförmigen Strahlprofil können z. B. auch jene Stellen als Grenze des Auftreffbereichs angesehen werden, an denen die maximale Strahlungsleistung pro Flächeneinheit z. B. auf 1/e, 1/e² etc gefallen ist. Der Strahlungseinwirkbereich wird normalerweise innerhalb des Strahlungsauftreffbereichs liegen, kann sich aber in Abhängigkeit von der gewählten Definition für den Strahlungsauftreffbereich auch über den Rand des Strahlungsauftreffbereichs hinaus erstrecken.

Bei der alternativen Vorgehensweise lassen sich Verbesserungen der Bauteileigenschaften auch bereits dann erzielen, wenn ein Strahlungsauftreffbereich entlang einer Verfestigungsbahn zum Vorheizen des Aufbaumaterials vor seiner Verfestigung und/oder zum Nachheizen für einen kontrollierten Abkühlvorgang nach der eigentlichen Verfestigung bewegt wird, ohne dass bei der Bewegung eine teilweise oder vollständige Aufschmelzung des Aufbaumaterials bzw. eine Überschreitung zumindest der Solidustemperatur des Aufbaumaterials bewirkt wird.

Beispiele für Energieeintragsparameter sind die Ausgangsleistung einer Strahlungsquelle zur Erzeugung der Energiestrahlung, also z.B. einer Laserquelle oder Elektronenquelle, die Fokuslage der Energiestrahlung in Bezug auf die Arbeitsebene, ein Durchmesser oder eine Gestalt des Strahlungseinwirkbereichs oder aber auch die lokale Verteilung der Strahlungsleistung pro Flächeneinheit innerhalb des Strahlungseinwirkbereichs, etc.

Die Auswirkung der Änderung eines Energieeintragsparameterwertes auf den Strahlungseinwirkbereich, insbesondere auf eine innerhalb desselben lokal auftreffende Strahlungsleistung pro Flächeneinheit oder eine auf den Strahlungseinwirkbereich insgesamt auftreffende Strahlungsleistung, kann für die additive Herstellvorrichtung, für die Steuerdaten bereitgestellt werden sollen, im Vorhinein ermittelt werden, z. B. durch Untersuchung eines Strahlprofils bzw. einer Intensitätsverteilung des Strahlbündels, durch unmittelbare Messung der Strahlungsleistung pro Flächeneinheit (z. B. mittels einer IR-Kamera oder mittels eines nahe der Arbeitsebene angebrachten Sensors), etc. Falls die Auswirkung der Änderung eines Energieeintragsparameterwertes bereits aus vorangegangenen Herstellvorgängen mit der verwendeten additiven Herstellvorrichtung und/oder dem verwendeten Aufbaumaterial bekannt ist, kann auch auf die genannten Voruntersuchungen verzichtet werden.

Beim Abtasten einer Verfestigungsbahn wird man als Breite der Verfestigungsbahn die Ausdehnung des Strahlungseinwirkbereichs senkrecht zur Bewegungsrichtung definieren.

Der im zweiten Schritt erwähnte, selektiv zu verfestigende Bereich einer Aufbaumaterialschicht, für den ein Datenmodell erzeugt wird, kann unter Umständen auch so klein sein, dass er nicht eine Mehrzahl von Verfestigungsbahnen, sondern lediglich eine einzige Verfestigungsbahn umfasst. Beispielsweise kann der Bereich auf einen Teil einer Kontur bzw. die Gesamtkontur eines Querschnitts eines Objektabschnitts beschränkt sein.

Die Erfinder konnten feststellen, dass mit dem obigen Vorgehen mit einer additiven Herstellvorrichtung Objekte mit verbesserter Homogenität hergestellt werden können. Eine Erklärung hierfür könnte folgende sein:
In der Regel können Steuerbefehle in einer additiven Herstellvorrichtung nicht instantan umgesetzt werden, da stets eine von Null verschiedene Reaktionszeit der mechanischen und elektrischen Komponenten der Vorrichtung vorhanden ist. Insbesondere gilt dies für additive Herstellvorrichtungen, in denen ein Strahlungseinwirkbereich mittels einer Ablenkvorrichtung (Scanvorrichtung) über das Aufbaumaterial bewegt wird. Solch eine Ablenkvorrichtung, beispielsweise ein Galvanometerspiegel, weist infolge ihrer von Null verschiedenen Masse eine Trägheit auf, die sich insbesondere bei Änderungen der Bewegungsgeschwindigkeit zeigt. Ein Übergang zu einer anderen Bewegungsgeschwindigkeit ist nur innerhalb eines von Null verschiedenen Zeitraums möglich, so dass in den Steuerdaten spezifizierte abrupte Geschwindigkeitsänderungen bei der Bewegung eines Strahlungseinwirkbereichs über das Aufbaumaterial in der Praxis nur allmählich (innerhalb eines von Null verschiedenen Zeitraums) stattfinden.

Während der Abtastung von Querschnitten eines herzustellenden Objekts mit einem Strahlungseinwirkbereich kommt es des öfteren zu Änderungen des Geschwindigkeitsvektors. Zum einen kann eine Änderung der Bewegungsgeschwindigkeit spezifiziert werden, um (bei gleichbleibender Strahlungsleistung pro Flächeneinheit) den Energieeintrag an lokale Gegebenheiten anzupassen. Zum anderen kann zur Erhöhung der Detailgenauigkeit insbesondere von filigranen Bereichen der Betrag der Bewegungsgeschwindigkeit lokal verringert werden, um den Strahlungseinwirkbereich mit hoher Präzision über den Objektquerschnitt bewegen zu können.

Normalerweise sind die Energieeintragsparameter und der Betrag der Bewegungsgeschwindigkeit eines Strahlungseinwirkbereichs aufeinander abgestimmt, um an den einzelnen zu bestrahlenden Stellen einer Aufbaumaterialschicht einen intendierten Energieeintrag in das Aufbaumaterial zu gewährleisten. An allen Stellen, an denen in den Steuerdaten eine Änderung des Geschwindigkeitsvektors spezifiziert wird, tritt jedoch infolge der verzögerten Umsetzung durch die Ablenkvorrichtung die Situation ein, dass in den Steuerdaten Energieeintragsparameterwerte spezifiziert sind, die an die geänderte Geschwindigkeit angepasst sind, in der additiven Herstellvorrichtung aufgrund der verzögerten Umsetzung jedoch noch nicht die geänderte Geschwindigkeit vorliegt. Während der für eine Geschwindigkeitsänderung, also eine Beschleunigung oder Verzögerung, benötigten Zeitdauer sind daher die spezifizierten Energieeintragsparameterwerte nicht an die tatsächlich vorliegende Geschwindigkeit angepasst.

Da erfindungsgemäß für den Zeitraum der Änderung der Bewegungsgeschwindigkeit der Satz von Energieeintragsparameterwerten, also zumindest ein Energieeintragsparameterwert, abgeändert wird, ist eine bessere Anpassung des Satzes von Energieeintragsparameterwerten an die tatsächlich vorhandene Bewegungsgeschwindigkeit des Strahlungseinwirkbereichs auf dem Aufbaumaterial innerhalb einer Arbeitsebene möglich. Damit werden die Schwankungen der Objekteigenschaften infolge einer unzureichenden Anpassung des Satzes von Energieeintragsparameterwerten an die Bewegungsgeschwindigkeit geringer und somit die Bauteilhomogenität verbessert. Die Erfindung macht sich hier zunutze, dass in den Steuerdaten spezifizierte Änderungen von Energieeintragsparameterwerten von einer additiven Herstellvorrichtung in der Regel deutlich schneller umgesetzt werden als Änderungen der Bewegungsgeschwindigkeit eines Strahlungseinwirkbereichs.

Insbesondere orientiert sich das erfindungsgemäße Vorgehen nicht an einer in den Steuerdaten spezifizierten Bewegungsgeschwindigkeit eines Strahlungseinwirkbereichs, sondern an der tatsächlichen Bewegungsgeschwindigkeit eines Strahlungseinwirkbereichs bei einem Herstellvorgang in einer additiven Herstellvorrichtung. Der Unterschied zwischen spezifizierter Bewegungsgeschwindigkeit und tatsächlich vorhandener Bewegungsgeschwindigkeit lässt sich anhand von Vorversuchen an der additiven Herstellvorrichtung ermitteln. Zudem werden von den Herstellern von Ablenkvorrichtungen in der Regel Parameter angegeben, die die Trägheit der Ablenkvorrichtung beschreiben, z.B. der sogenannte Schleppverzug. Anhand dieser Parameter kann ebenfalls eine Diskrepanz zwischen spezifizierter Bewegungsgeschwindigkeit und tatsächlich vorhandener Bewegungsgeschwindigkeit ermittelt (z.B. errechnet) werden. Weiterhin ist es auch möglich, bei der Ansteuerung der Ablenkvorrichtung eine fixe Zeitdauer für die Umsetzung einer Geschwindigkeitsänderung vorzugeben, die unabhängig von der Größe der Geschwindigkeitsänderung immer denselben Wert hat. In diesem Fall wird erfindungsgemäß der Satz von Energieeintragsparameterwerten während der fixen Zeitdauer zumindest einmal abgeändert.

Es sei noch betont, dass bereits Verbesserungen der Bauteilhomogenität erzielbar sind, wenn während zumindest einer Geschwindigkeitsänderung beim Abtasten einer Verfestigungsbahn ein einem Strahlungseinwirkbereich zugeordneter Satz von Energieeintragsparameterwerten zumindest einmal abgeändert wird.

Es sei noch bemerkt, dass die im dritten Schritt für die Generierung eines Steuerdatensatzes bereitgestellten Steuerdaten zum einen aus dem im zweiten Schritt erzeugten zumindest einen Datenmodell selbst bestehen können, zum anderen das zumindest eine Datenmodell aber auch entsprechend etwaigen Formatanforderungen für die Integration in den Steuerdatensatz noch aufbereitet werden kann.

Bevorzugt wird ermittelt, ob eine Zeitdauer ta der Änderung des Geschwindigkeitsvektors bei der Bewegung des Strahlungseinwirkbereichs einen vorgegebenen Zeitdauer-Minimalwert tamin überschreitet, und bei dem nur für den Fall einer ermittelten Überschreitung des Zeitdauer-Minimalwerts tamin eine Abänderung zumindest eines Energieeintragsparameterwertes spezifiziert wird.

Eine Anpassung von Energieeintragsparameterwerten ergibt insbesondere dann Sinn, wenn von einem längeren Zeitraum für die Umsetzung einer spezifizierten Geschwindigkeitsänderung in der additiven Herstellvorrichtung auszugehen ist. Bei dieser Variante des Vorgehens wird daher zunächst abgeprüft, wie groß die Zeitdauer ta für die praktische Umsetzung einer spezifizierten Geschwindigkeitsänderung ist. Die Ermittlung der Zeitdauer kann dabei unter Rückgriff auf Vorversuche mit der zum Einsatz kommenden additiven Herstellvorrichtung geschehen. Es ist aber auch denkbar, dass die Diskrepanz zwischen der tatsächlichen Geschwindigkeit und einer in einer Steuerdatei spezifizierten Geschwindigkeit anhand von vorangegangenen Herstellvorgängen oder von Spezifikationen des Herstellers einer Energieeintragseinrichtung ermittelt wird. Für geringe Geschwindigkeitsänderungen wird beispielsweise oftmals ein vorgegebener Minimalwert tamin für die Zeitdauer nicht überschritten werden. Welche Änderungen des Geschwindigkeitsvektors noch kein erfindungsgemäßes Eingreifen erforderlich machen, hängt dabei vom Beschleunigungsvermögen der Strahlablenkvorrichtung in der additiven Herstellvorrichtung ab.

Eine tatsächliche Änderung des Geschwindigkeitsvektors der Bewegung eines Strahlungseinwirkbereichs oder Strahlungsauftreffbereichs in der Arbeitsebene kann experimentell z.B. dadurch ermittelt werden, dass, z. B. in einem Vorversuch, einer Energieeintragseinrichtung zu einem Zeitpunkt to eine Geschwindigkeitsänderung vorgegeben wird und ermittelt wird, welche Wegstrecke der Strahlungseinwirkbereich oder der Strahlungsauftreffbereich in der Arbeitsebene ab einer dem Zeitpunkt to zugeordneten Stelle X0 innerhalb eines vorgegebenen Zeitraums Δt in der Arbeitsebene zurückgelegt hat. Da anhand der vorgegebenen geänderten Geschwindigkeit ermittelt werden kann, welche Strecke ΔX0 der Strahlungseinwirkbereich oder Strahlungsauftreffbereich ohne das Auftreten von, z.B. trägheitsbedingten, Verzögerungen zurückgelegt hätte, lässt sich sich somit die Zeitdauer ta der Änderung des Geschwindigkeitsvektors dadurch ermitteln, dass die tatsächlich zurückgelegte Strecke des Strahlungseinwirkbereichs oder Strahlungsauftreffbereichs mit ΔX0 verglichen wird.

Weiter bevorzugt wird ermittelt, ob ein Richtungsänderungswinkel ϕ bei der Bewegung des Strahlungseinwirkbereichs entlang der Verfestigungsbahn einen vorgegebenen Minimalwinkel ϕₘᵢₙ überschreitet, wobei nur für den Fall einer ermittelten Überschreitung des Minimalwinkels ϕₘᵢₙ eine Abänderung zumindest eines Energieeintragsparameterwertes spezifiziert wird.

Zuweilen wird die Bewegungsgeschwindigkeit dort verringert, wo eine abrupte Änderung der Bewegungsrichtung des Strahlungseinwirkbereichs spezifiziert ist. Dadurch kann der Strahlungseinwirkbereich in präziserer Weise einem Knick an der entsprechenden Stelle einer Verfestigungsbahn folgen, da einer Ablenkvorrichtung mehr Zeit für die Umsetzung der Richtungsänderung zur Verfügung steht. In der Regel ist dabei die Absenkung des Betrags der Geschwindigkeit umso größer, je größer ein Richtungsänderungswinkel ist. Bei der beschriebenen Vorgehensvariante wird in den Modelldaten die Größe von Richtungsänderungswinkeln ermittelt und dies als Grundlage für eine Entscheidung genommen, ob eine Abänderung von Energieeintragsparameterwerten vorgenommen werden soll. Insbesondere kann also festgelegt werden, dass nur ab einer bestimmten Größe eines Richtungsänderungswinkels eine Anpassung von Energieeintragsparameterwerten notwendig ist und für kleinere Winkel als ein Minimalwinkel ϕₘᵢₙ eine Anpassung nicht notwendig ist. Dadurch kann das Vorgehen insbesondere insofern vereinfacht sein, als der zeitliche Verlauf einer Geschwindigkeitsänderung nicht näher betrachtet werden muss, sondern pauschal anhand der Gestalt einer Verfestigungsbahn entschieden werden kann.

Weiter bevorzugt wird ermittelt, ob der Betrag der Krümmung κ eines Wegs des Strahlungseinwirkbereichs entlang der Verfestigungsbahn eine vorgegebene Minimalkrümmung κₘᵢₙ überschreitet, und nur für den Fall einer ermittelten Überschreitung der Minimalkrümmung κₘᵢₙ eine Abänderung zumindest eines Energieeintragsparameterwertes spezifiziert.

Selbst wenn es keine abrupten Änderungen der Bewegungsrichtung eines Strahlungseinwirkbereichs gibt, so tritt häufig der Fall ein, dass ein Strahlungseinwirkbereich bei einer bestimmten Geschwindigkeit Wege mit einem großen Krümmungsradius in präziserer Weise abfahren kann als Wege mit einem kleinen Kurvenradius. Entsprechend ist oftmals die spezifizierte Bewegungsgeschwindigkeit für kleine Kurvenradien kleiner als für große Kurvenradien. Bei kleinen Kurvenradien ändert sich innerhalb einer bestimmten Zeit eine Bewegungsrichtung um einen größeren Wert als bei großen Kurvenradien. Damit wirkt sich aber eine Reaktionsträgheit einer Strahlablenkvorrichtung (Scanvorrichtung) stärker bei kleinen Kurvenradien aus. Durch die Verringerung der Bewegungsgeschwindigkeit steht einer Ablenkvorrichtung mehr Zeit für die Umsetzung der Richtungsänderung zur Verfügung. In der Regel ist dabei die Absenkung der Geschwindigkeit umso größer, je kleiner ein Kurvenradius ist. Bei der beschriebenen Vorgehensvariante wird in den Modelldaten die Größe von Kurvenradien ermittelt und dies als Grundlage für eine Entscheidung genommen, ob eine Abänderung von Energieeintragsparameterwerten vorgenommen werden soll. Insbesondere kann also festgelegt werden, dass nur für stärkere Krümmungen als eine bestimmte Krümmung κ, die gleich dem Kehrwert des Kurvenradius ist, eine Anpassung von Energieeintragsparameterwerten notwendig ist, während für weniger starke Krümmungen als eine Minimalkrümmung κₘᵢₙ eine Anpassung von Energieeintragsparameterwerten nicht notwendig ist. Dadurch kann das Vorgehen insbesondere insofern vereinfacht sein, als der zeitliche Verlauf einer Geschwindigkeitsänderung nicht näher betrachtet werden muss, sondern pauschal anhand der Gestalt einer Verfestigungsbahn entschieden werden kann.

Es sei hier noch bemerkt, dass in einem Datenmodell in der Regel diskrete Punkte in der Ebene eines Objektquerschnitts spezifiziert werden. Als Folge wird ein gekrümmter Weg in der Praxis oft durch eine Abfolge von geradlinigen Wegabschnitten ("Mikrovektoren") spezifiziert. Zur Ermittlung einer Krümmung wird dann beispielsweise eine Funktion an die Abfolge von Mikrovektoren angenähert, deren Krümmung dann ermittelt wird,

Weiter bevorzugt erfolgt eine Abänderung zumindest eines Energieeintragsparameterwertes nur für den Fall, dass sich der Betrag des Geschwindigkeitsvektors während der Zeitdauer ta monoton erhöht oder monoton erniedrigt.

Gerade bei monotonen Geschwindigkeitsänderungen macht sich eine vorhandene endliche Reaktionszeit einer Ablenkvorrichtung am stärksten bemerkbar. Daher beschränkt sich bei dieser Variante des Vorgehens die Abprüfung auf derartige Geschwindigkeitsänderungen, wodurch das Verfahren effizienter wird.

Bevorzugt wird eine Abänderung zumindest eines Energieeintragsparameterwertes dergestalt spezifiziert, dass während der Änderung des Geschwindigkeitsvektors der Bewegung des Strahlungseinwirkbereichs eine Strahlungsleistung pro Flächeneinheit PA im Strahlungseinwirkbereich größer oder gleich einem, bevorzugt lokal, vorgegebenen Leistungs-Minimalwert PAmin und/oder kleiner oder gleich einem, bevorzugt lokal, vorgegebenen Leistungs-Maximalwert PAmax ist.

In vielen Fällen soll durch den zumindest einen Strahlungseinwirkbereich die Strahlungsleistung pro Flächeneinheit dem Aufbaumaterial möglichst homogen zugeführt werden. Der Grund ist, dass für die Erzielung homogener Objekteigenschaften die Strahlungsleistung pro Flächeneinheit möglichst oberhalb eines vorgegebenen Minimalwerts PAmin und/oder unterhalb eines vorgegebenen Maximalwerts PAmax liegen sollte. Der Minimalwert PAmin und der Maximalwert PAmax hängen z.B. vom verwendeten Aufbaumaterial oder erwünschten Objekteigenschaften wie z.B. der Dichte oder der Oberflächenrauheit ab.

In manchen Fällen wird an unterschiedlichen Stellen eines herzustellenden Objektquerschnitts ein unterschiedlicher Energieeintrag in das Aufbaumaterial, insbesondere ein unterschiedlicher Wert der Strahlungsleistung pro Flächeneinheit, angestrebt. Ein Grund hierfür kann sein, dass infolge der Gestalt des Objektquerschnitts an unterschiedlichen Stellen innerhalb des Objektquerschnitts die eingetragene Energie von der Umgebung des jeweiligen Eintragsortes unterschiedlich abgeleitet wird. In solchen Fällen werden ein Minimalwert PAmin und/oder ein Maximalwert PAmax lokal vorgegeben, so dass für unterschiedliche Stellen des Objektquerschnitts unterschiedliche Werte vorgegeben werden können.

Wenn die Strahlungsleistung pro Flächeneinheit innerhalb des Strahlungseinwirkbereichs auf dem Aufbaumaterial variiert, sollte für eine Vergleichbarkeit von Werten der Strahlungsleistung pro Flächeneinheit an unterschiedlichen Stellen der Arbeitsebene dem Vergleich ein Referenzwert bezüglich einer lokalen Verteilung der Strahlungsleistung pro Flächeneinheit innerhalb des Strahlungseinwirkbereichs zugrunde gelegt werden.

Solch ein Referenzwert ist bevorzugt der jeweilige Maximalwert der Strahlungsleistung pro Flächeneinheit innerhalb des Strahlungseinwirkbereichs, da für jede lokale Verteilung der Strahlungsleistung pro Flächeneinheit ein Maximum bestimmt werden kann. Alternativ können aber auch andere Referenzwerte gewählt werden, wie beispielsweise ein Mittelwert der Strahlungsleistung pro Flächeneinheit innerhalb des Strahlungseinwirkbereichs, die Ausgangsleistung der Strahlungsquelle, die zur Erzeugung des Strahlbündels dient (z. B. einer (Pump-)Laserquelle), die mittlere Strahlungsintensität im Strahlbündel, die maximale Strahlungsintensität im Strahlbündel, die Gesamtstrahlungsleistung im Strahlbündel, die integrale Strahlungsleistung pro Flächeneinheit im Strahlungsauftreffbereich oder eine aus verschiedenen radiometrischen Basisgrößen errechnete Größe. Das Hauptaugenmerk ist hierbei auf die Vergleichbarkeit von unterschiedlichen Stellen der Verfestigungsbahn miteinander gerichtet. Wichtig bei der Festlegung des Referenzwertes der Strahlungsleistung pro Flächeneinheit im Strahlungsauftreffbereich ist also, dass der Referenzwert mit der Strahlungsleistung pro Flächeneinheit an einer Position innerhalb des Strahlungsauftreffbereichs positiv korreliert ist, also monoton mit der Strahlungsleistung pro Flächeneinheit im Strahlungsauftreffbereich anwächst.

Wenn einer bestimmten Strahlungsleistung pro Flächeneinheit entsprechende Energieeintragsparameterwerte spezifiziert werden, so kann dies auf verschiedene Weisen geschehen. Beispielsweise kann ein Wert der Ausgangsleistung der Strahlungsquelle, die zur Erzeugung der Strahlung in einem Strahlungseinwirkbereich dient (z. B. einer (Pump-)Laserquelle), vorgegeben werden. Alternativ kann z. B. auch die lokale Verteilung der Strahlungsintensität pro Flächeneinheit innerhalb des Strahlungseinwirkbereichs vorgegeben werden, indem z. B. die Fokussierung innerhalb des Strahlungseinwirkbereichs variiert wird.

Eine im Strahlungseinwirkbereich vorhandene Strahlungsleistung pro Flächeneinheit kann für die additive Herstellvorrichtung im Vorhinein ermittelt werden, z. B. durch Untersuchung eines Strahlprofils bzw. einer Intensitätsverteilung im Strahlungseinwirkbereich, so dass der Zusammenhang der Strahlungsleistung pro Flächeneinheit mit der vorgegebenen Ausgangsleistung der Strahlungsquelle oder z. B. der vorgegebenen Intensitätsverteilung im Strahlbündel bekannt ist.

Bevorzugt wird während einer Änderung des Geschwindigkeitsvektors der Bewegung des Auftreffbereichs eine mehrmalige Abänderung zumindest eines Energieeintragsparameterwertes spezifiziert.

Da sich während einer Änderung der Bewegungsgeschwindigkeit des Strahlungseinwirkbereichs die Geschwindigkeit in der Regel allmählich, also stufenlos und nicht sprunghaft, ändert, ist es vorteilhaft, wenn während dieses Vorgangs auch der Satz von Energieeintragsparameterwerten mehr als einmal abgeändert wird. Es kann dann nämlich der in das Aufbaumaterial einzutragende Energiebetrag präziser an die zu einem Zeitpunkt vorhandene Geschwindigkeit angepasst werden.

Insbesondere wird bevorzugt spezifiziert, dass während der Änderung des Geschwindigkeitsvektors der Bewegung des Auftreffbereichs eine Abänderung zumindest eines Energieeintragsparameterwertes mindestens jede Millisekunde, bevorzugt mindestens alle 100µs, noch bevorzugter mindestens alle 10µs, noch weiter bevorzugt mindestens jede Mikrosekunde, insbesondere mindestens alle 100ns spezifiziert wird.

Je häufiger während einer Änderung der Bewegungsgeschwindigkeit des Strahlungseinwirkbereichs der Satz von Energieeintragsparametern angepasst wird, desto genauer kann der tatsächlich stattfindende Energieeintrag in das Aufbaumaterial an den intendierten Energieeintrag angepasst werden. Wie oft während einer Geschwindigkeitsänderung ein Energieeintragsparameterwert abgeändert werden kann, hängt davon ab, wie schnell in den Steuerdaten spezifizierte Änderungen von Energieeintragsparameterwerten von einer additiven Herstellvorrichtung umgesetzt werden können, insbesondere mit welcher Maximalfrequenz eine Energieeintragseinrichtung in derselben angesteuert werden kann.

Bevorzugt wird spezifiziert, dass die Verfestigungsbahn auf und/oder entlang zumindest eines Teils einer Kontur eines Objektquerschnitts verläuft.

Als Kontur wird hier der Umriss eines Objektquerschnitts gesehen, also jener Teil eines Objektquerschnitts, der nach einer selektiven Verfestigung einer Aufbaumaterialschicht zur Herstellung des Objektquerschnitts unmittelbar an nicht verfestigtes Aufbaumaterial angrenzt. Die Kontur kann somit als Rand (im topologischen Sinne) bzw. Begrenzungslinie des Objektquerschnitts angesehen werden. In vielen Fällen wird die Kontur dergestalt verfestigt, dass ein oder mehrere Strahlungseinwirkbereiche die Gestalt der Kontur in der selektiv zu verfestigenden Aufbaumaterialschicht abfahren. Die resultierende Verfestigungsbahn weist in solchen Fällen häufig Knicke und Krümmungen auf, die aus der Gestalt des Umrisses des zugehörigen Objektquerschnitts resultieren. Entsprechend eignet sich ein Vorgehen gemäß der vorliegenden Erfindung besonders für Verfestigungsbahnen, die entlang zumindest eines Teils einer Kontur eines Objektquerschnitts verlaufen.

Weiter bevorzugt wird spezifiziert, dass während eines vorgegebenen ersten Zeitraums ab dem Anfang einer Verfestigungsbahn der Betrag des Geschwindigkeitsvektors der Bewegung des Strahlungseinwirkbereichs erhöht wird und/oder während eines vorgegebenen zweiten Zeitraums vor einem Erreichen des Endes einer Verfestigungsbahn der Betrag des Geschwindigkeitsvektors der Bewegung des Strahlungseinwirkbereichs erniedrigt wird,
wobei vorzugsweise während des vorgegebenen ersten Zeitraums und/oder während des vorgegebenen zweiten Zeitraums eine Abänderung zumindest eines Energieeintragsparameterwertes dergestalt spezifiziert wird, dass während des vorgegebenen ersten Zeitraums eine Strahlungsleistung pro Flächeneinheit im Strahlungseinwirkbereich sich erhöht und/oder während des vorgegebenen zweiten Zeitraums eine Strahlungsleistung pro Flächeneinheit im Strahlungseinwirkbereich sich erniedrigt.

Bevorzugt wird die Geschwindigkeit monoton abgeändert. Beispielsweise kann eine kontinuierliche, insbesondere lineare, Abnahme der Bewegungsgeschwindigkeit des Strahlungseinwirkbereichs entlang der Verfestigungsbahn bis zum Erreichen des Endes der Verfestigungsbahn spezifiziert werden. Entsprechendes gilt für eine Erhöhung der Geschwindigkeit ab dem Anfang der Verfestigungsbahn. Je nach verwendeter Steuereinrichtung kann die Geschwindigkeit entsprechend einer Funktion abgeändert werden, die durch einen Steuermechanismus für die Bewegung des Strahlungseinwirkbereichs vorgegeben ist. Dabei könnten auch kurzfristige Erhöhungen der Geschwindigkeit denkbar sein, während sich das Strahlbündel dem Endpunkt der Verfestigungsbahn entgegenbewegt oder kurzfristige Erniedrigungen der Geschwindigkeit kurz nach dem Verlassen des Anfangspunktes der Verfestigungsbahn. Schließlich ist es auch möglich, dass die Geschwindigkeit in Stufen abgeändert wird, beispielsweise nach Verlassen des Anfangspunktes der Verfestigungsbahn zunächst in Stufen erhöht wird, bis ein Maximal- bzw. vorgegebener Zielwert der Geschwindigkeit erreicht ist. Ebenso kann die Geschwindigkeit in Stufen zum Ende der Verfestigungsbahn hin verringert werden.

Das Ausmaß, um das die Geschwindigkeit der Bewegung des Strahlungseinwirkbereichs zum Endpunkt der Verfestigungsbahn hin verringert wird bzw. vom Anfangspunkt der Verfestigungsbahn an erhöht wird, kann an Bedingungen eines jeweiligen Herstellungsprozesses gekoppelt werden. Es kann beispielsweise von einem von einer Energieeintragseinrichtung verwendeten Spiegelsystem zur Umlenkung von Laserstrahlen, und/oder vom Aufbaumaterial abhängig sein, für welches z. B. bestimmte Aufschmelzbedingungen einzuhalten sind.

Die in das Aufbaumaterial eingetragene Energiemenge pro Flächeneinheit kann besonders dann präzise eingestellt werden, wenn die Strahlungsleistung pro Flächeneinheit und die Geschwindigkeit der Bewegung des Strahlungseinwirkbereichs gemeinsam, insbesondere simultan, verändert werden. Dabei kann für die zur Verfestigung einzutragende Energiemenge ein gewisser Spielraum vorhanden sein, z. B. bei einer Verwendung von metallenem oder metallhaltigem bzw. metallbasiertem (Metallanteil >50%) Pulver als Aufbaumaterial. Es kann daher ausreichend sein, wenn bei der gemeinsamen Abänderung von Strahlungsleistung pro Flächeneinheit und Geschwindigkeit der Bewegung des Strahlungseinwirkbereichs die einzutragende Energiemenge pro Flächeneinheit innerhalb eines vorgegebenen Wertebereichs gehalten wird. Der Ausdruck "einzutragende Energiemenge pro Flächeneinheit" bezieht sich dabei auf die u. a. unter Berücksichtigung des Absorptionsvermögens des Aufbaumaterials im Vorhinein ermittelte Flächenenergie, die dem Aufbaumaterial zur Verfestigung desselben zugeführt werden soll. Bevorzugt wird die Strahlungsleistung pro Flächeneinheit während des vorgegebenen ersten Zeitraums im gesamten Strahlungseinwirkbereich des Strahlbündels erhöht und/oder während des vorgegebenen zweiten Zeitraums im gesamten Strahlungseinwirkbereich des Strahlbündels erniedrigt. Weiter bevorzugt wird durch die Abänderung zumindest eines Wertes eines Energieeintragsparameters die Intensitätsverteilung innerhalb eines zur Zufuhr der Strahlungsenergie zum Strahlungseinwirkbereich dienenden Strahlbündels abgeändert.

Insbesondere wenn die Bewegungsgeschwindigkeit innerhalb der Fläche des Strahlungseinwirkbereichs variiert, ist es von Vorteil, wenn man darauf durch eine Abänderung der Variation der Strahlungsleistung pro Flächeneinheit innerhalb des Strahlungseinwirkbereichs reagieren kann. Dies kann durch eine Abänderung der Intensitätsverteilung innerhalb des Strahlbündels geschehen, also eine Abänderung der Variation der Strahlungsintensität innerhalb des Strahlbündels. Solch ein Vorgehen ergibt insbesondere in einem Fall Sinn, in dem sich die Richtung des Geschwindigkeitsvektors ändert. In solch einem Fall können sich unterschiedliche Punkte des Strahlungseinwirkbereichs mit einem unterschiedlichen Geschwindigkeitsbetrag bewegen, selbst wenn ihre Winkelgeschwindigkeit gleich ist und/oder selbst wenn die Änderung der Richtung des Geschwindigkeitsvektors nicht von einer Rotation des Strahlungseinwirkbereichs innerhalb der Arbeitsebene begleitet ist. Natürlich ist das genannte Vorgehen aber auch insbesondere bei Rotationen des Strahlungseinwirkbereichs innerhalb der Arbeitsebene sinnvoll. Durch eine Abänderung der Variation der Strahlungsleistung pro Flächeneinheit innerhalb des Strahlungseinwirkbereichs kann jeweils ein aus unterschiedlichen Geschwindigkeitsbeträgen im Strahlungseinwirkbereich resultierender unterschiedlicher Energieeintrag pro Flächeneinheit kompensiert werden. Es sei noch bemerkt, dass der Begriff "Abänderung der Variation der Strahlungsleistung pro Flächeneinheit" nicht zwangsweise implizieren soll, dass vor der Abänderung bereits die Strahlungsleistung pro Flächeneinheit innerhalb des Strahlungseinwirkbereichs variiert. Das Vorgehen ergibt auch dann Sinn, wenn vor der Änderung des Geschwindigkeitsvektors die Strahlungsleistung pro Flächeneinheit an allen Stellen innerhalb des Strahlungseinwirkbereichs gleich ist.

Die beschriebene Abänderung der Intensitätsverteilung innerhalb des Strahlbündels bzw. Abänderung der Variation der Strahlungsleistung pro Flächeneinheit innerhalb des Strahlungseinwirkbereichs wird bevorzugt nur in den Fällen durchgeführt, in denen eine maximale Abmessung des Strahlungseinwirkbereichs größer als 500 µm, bevorzugter größer als 700 µm,noch bevorzugter größer als 800 µm,noch weiter bevorzugt größer als 900 µm, noch weiter bevorzugt größer als 1000 µm und noch weiter bevorzugt größer als 2000 µm ist. Der Hintergrund ist der, dass unterschiedliche Bewegungsgeschwindigkeiten innerhalb des Strahlungseinwirkbereichs bei Richtungswechseln umso ausgeprägter sind, je größer die Ausdehnung des Strahlungseinwirkbereichs ist.

Das genannte Vorgehen ist insbesondere auch für "Wobbel"-Bewegungen des Strahlungseinwirkbereichs in der Arbeitsebene von Vorteil, womit periodische oder unregelmäßige Bewegungen des Strahlungseinwirkbereichs in der Arbeitsebene, insbesondere nahe dem Endpunkt einer Verfestigungsbahn, gemeint sind. Die Wobbelbewegung um eine Stelle in der Arbeitsebene herum wird dabei bevorzugt so ausgeführt, dass die Mitte des Strahleinwirkbereichs während der Bewegung einen Abstand zu der Stelle aufweist, der geringer als das Fünffache, vorzugsweise geringer als das Dreifache, besonders bevorzugt geringer als das Doppelte einer maximalen Ausdehnung des Strahlungseinwirkbereichs in der Arbeitsebene ist. Durch die "Wobbel"-Bewegung kann für eine gleichmäßigere Verteilung der eingetragenen Strahlungsenergie im Aufbaumaterial gesorgt werden, wodurch beispielsweise eventuell am Endpunkt der Verfestigungsbahn vorhandene Vertiefungen oder Materialanhäufungen verringert werden. Infolge der zahlreichen Richtungsänderungen beim "Wobbeln", insbesondere wenn diese mit kleinen Kurvenradien stattfinden, ist die Vorteilhaftigkeit des genannten Vorgehens offensichtlich.

Die Abänderung der Intensitätsverteilung erfolgt so, dass die Fläche des Strahlungseinwirkbereichs im Wesentlichen gleich bleibt. Der Begriff "im Wesentlichen" soll dabei ausdrücken, dass sich die Fläche bei der Abänderung der Intensitätsverteilung um maximal 10% ändert, bevorzugt um maximal 5%, weiter bevorzugt um maximal 1% ändert. Damit sollen Abänderungen der Intensitätsverteilung durch Fokusänderungen, also durch Abänderungen der Größe und Gestalt des Strahlungseinwirkbereichs, explizit ausgeschlossen werden. Die Abänderung der Intensitätsverteilung geschieht bei dieser Variante der Erfindung so, dass ein durch unterschiedliche Geschwindigkeitsbeträge während der abtastenden Bewegung des Strahlungseinwirkbereichs über das Baufeld bzw. die Oberfläche des Pulverbetts innerhalb des Strahlungseinwirkbereichs hervorgerufener unterschiedlicher Energieeintrag pro Flächeneinheit kompensiert wird, was durch eine Fokusabänderung, d. h. eine Defokussierung und/oder eine Verkippung der Fokusebene, nicht hinreichend möglich ist, da diese in der Regel zu einer Veränderung der Größe des Strahlungseinwirkbereichs führt.

Bei einer bevorzugten Implementierung der Abänderung der Intensitätsverteilung innerhalb eines zur Zufuhr der Strahlungsenergie zum Strahlungseinwirkbereich dienenden Strahlbündels wird der Strahlungseinwirkbereich in mindestens zwei Strahlungseinwirk-Unterbereiche aufgeteilt und jedem der Strahlungseinwirk-Unterbereiche ein Unterbereichs-Geschwindigkeitsvektor zugeordnet, wobei im Falle unterschiedlicher Unterbereichs-Geschwindigkeitsvektoren ein aus diesen unterschiedlichen Unterbereichs-Geschwindigkeitsvektoren selbst bei konstanter Intensitätsverteilung im Strahlbündel resultierender unterschiedlicher Energieeintrag pro Flächeneinheit in den Strahlungseinwirk-Unterbereichen kompensiert wird, indem den Strahlungseinwirk-Unterbereichen unterschiedliche Werte zumindest eines Energieeintragsparameters zugewiesen werden. Es sei noch bemerkt, dass die beschriebene Vorgehensweise sich auch anbietet, wenn eine inhomogene Intensitätsverteilung im Strahlbündel, insbesondere eine asymmetrische Intensitätsverteilung, in Kombination mit unterschiedlichen Unterbereichs-Geschwindigkeitsvektoren zu unterschiedlichen Energieeinträgen pro Flächeneinheit in den Strahlungseinwirk-Unterbereichen führt.

Die Zuweisung von Strahlungseinwirk-Unterbereichen erfolgt dabei bevorzugt so, dass die Grenze zwischen einem Strahlungseinwirk-Unterbereich und einem daran angrenzenden Strahlungseinwirk-Unterbereich im Wesentlichen parallel zur Richtung des Geschwindigkeitsvektors des Strahlungseinwirkbereichs verläuft. Dann kann nämlich bei Richtungsänderungen des Bewegungsvektors berücksichtigt werden, dass sich die Strahlungseinwirk-Unterbereiche auf Bahnen mit unterschiedlichen Krümmungsradien bewegen. Bevorzugt wird den Strahlungseinwirk-Unterbereichen jeweils ein Unterbereichs-Geschwindigkeitsvektor zugeordnet, der sich aus einer Mittelung über die Geschwindigkeitsvektoren aller Stellen des jeweiligen Strahlungseinwirk-Unterbereichs ergibt.

Wenn die Verfestigungsbahnen größtenteils krummlinig verlaufen, also eine Krümmung aufweisen, dann führt das erfindungsgemäße Vorgehen zwar einerseits zu einer deutlich verbesserten Bauteilhomogenität, andererseits können sich aufgrund der häufigen Veränderungen der Intensitätsverteilung im Strahlungseinwirkbereich aber auch die zusätzlichen Umschaltzeiten der Intensitätsverteilung bemerkbar machen und zu einer Verlängerung des selektiven Verfestigungsschrittes einer Aufbaumaterialschicht führen. Größtenteils krummlinige Verläufe der Verfestigungsbahnen findet man gerade bei dem im Stand der Technik bekannten sogenannten "onion hatching", bei dem die Verfestigungsbahnen innerhalb eines Objektquerschnitts zwiebelschalenförmig entlang verlaufen, die Verfestigungsbahnen also konzentrische geschlossene Linien sind.

Insbesondere wenn aber beim erwähnten "onion hatching" vorzugsweise die Krümmung entlang des im Wesentlichen gesamten Verlaufs der Verfestigungsbahn konstant gewählt wird (z.B. die Verfestigungsbahnen kreis(ring)förmig sind), dann ändert sich die Krümmung im Wesentlichen nur beim Übergang zu einer anderen Verfestigungsbahn, die (aufgrund eines anderen Radius) eine andere Krümmung aufweist. In solch einem Fall ändern sich damit aber auch die Geschwindigkeitsunterschiede der einzelnen Stellen innerhalb eines Strahlungseinwirkbereichs nicht, so dass in solch einem Fall die Intensitätsverteilung während der Bewegung entlang einer Verfestigungsbahn konstant gehalten werden kann und bevorzugt nur beim Übergang zu einer anderen Verfestigungsbahn abgeändert wird. Dadurch wird die Dauer des Herstellvorgangs eines Objekts selbst bei Anwendung des "onion hatching" nur unmerklich verlängert.

Eine weitere Möglichkeit der Begrenzung des Aufwands bei der Festlegung der Energieeintragsparameterwerte besteht darin, während der Bewegung eines Strahlungseinwirkbereichs den maximal zwischen unterschiedlichen Stellen innerhalb des Strahlungseinwirkbereichs vorhandenen Unterschied des Betrags der Geschwindigkeit zu ermitteln und eine Kompensation durch Zuweisung unterschiedlicher Werte zumindest eines Energieeintragsparameters nur für den Fall vorzunehmen, dass der innerhalb des Strahlungseinwirkbereichs vorkommende maximale Unterschied des Betrags der Geschwindigkeit einen vorgegebenen Grenzwert überschreitet.

Bei einem erfindungsgemäßen additiven Herstellverfahren zur Herstellung eines dreidimensionalen Objekts, wobei das Objekt mittels einer additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparameterwerten entlang einer Anzahl von Verfestigungsbahnen abgetastet werden, wird der Ablauf des additiven Herstellverfahrens durch einen Steuerdatensatz gesteuert wird, der unter Verwendung eines erfindungsgemäßen computergestützten Verfahrens zur Bereitstellung von Steuerdaten für eine additive Herstellvorrichtung zur Herstellung eines dreidimensionalen Objekts generiert wurde.

Die etwas weiter oben erwähnte Abänderung der Intensitätsverteilung innerhalb eines zur Zufuhr der Strahlungsenergie zum Strahlungseinwirkbereich dienenden Strahlbündels ist in all ihren Varianten gerade bei additiven Herstellverfahren von Vorteil, bei denen die Tiefenerstreckung des Schmelzbades, das durch einen auftreffenden Strahl im Aufbaumaterial erzeugt wird, geringer ist als das Dreifache einer Schichtdicke einer Aufbaumaterialschicht, bevorzugt geringer ist als das Doppelte einer Schichtdicke einer Aufbaumaterialschicht. Diese Bedingung ist z.B. beim Lasersintern von Polymerpulver oder aber beim Aufschmelzen von Metallpulver mittels Wärmeleitungsschweißens erfüllt.

Wenn erfindungsgemäß bereitgestellte Steuerdaten in einem Steuerdatensatz verwendet werden, der für die Steuerung eines additiven Herstellverfahrens generiert wurde, insbesondere die Steuerung eines schichtweisen additiven Herstellverfahrens, wie beispielsweise eines schichtweisen Pulverschmelz- oder Sinterverfahrens, wie z. B. SLS oder DMLS oder SLM, dann kann die Bauteilhomogenität des Objekts verbessert werden.

Eine erfindungsgemäße Vorrichtung zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparameterwerten entlang einer Anzahl von Verfestigungsbahnen abgetastet werden, weist auf:
eine Datenzugriffseinheit, die ausgelegt ist zum Zugriff auf computerbasierte Modelldaten zumindest eines Abschnitts des herzustellenden Objekts,
eine Datenmodell-Erzeugungseinheit, die ausgelegt ist, zumindest ein Datenmodell eines zur Herstellung des zumindest einen Objektabschnitts selektiv zu verfestigenden Bereichs einer Aufbaumaterialschicht zu erzeugen, wobei in dem Datenmodell ein Verfestigen des Aufbaumaterials durch Bewegen zumindest eines Strahlungseinwirkbereichs entlang zumindest einer Verfestigungsbahn spezifiziert ist,
wobei während einer Änderung des Geschwindigkeitsvektors der Bewegung eines Strahlungseinwirkbereichs auf dem Aufbaumaterial entlang der Verfestigungsbahn eine zumindest einmalige Abänderung zumindest eines Wertes eines Energieeintragsparameters aus dem Satz von Energieeintragsparameterwerten spezifiziert ist, und
eine Steuerdaten-Bereitstellungseinheit, die ausgelegt ist, Steuerdaten entsprechend dem durch die Datenmodell-Erzeugungseinheit erzeugten zumindest einen Datenmodell für die Generierung eines Steuerdatensatzes für die additive Herstellvorrichtung bereit zu stellen.

Die Bereitstellung des im zweiten Schritt erzeugten Datenmodells für die Generierung eines Steuerdatensatzes kann durch die Steuerdaten-Bereitstellungseinheit selbst geschehen, indem diese das erzeugte Datenmodell in einen Steuerdatensatz für die additive Herstellvorrichtung integriert. Bereitstellen umfasst aber auch ein Weiterleiten des Datenmodells an eine Datenverarbeitungsvorrichtung, welche das Datenmodell in einen Steuerdatensatz integriert, oder ein direktes Weiterleiten an eine additive Herstellvorrichtung. Insbesondere ist es möglich, während eines Herstellvorgangs in der additiven Herstellvorrichtung dieser dynamisch Datenmodelle für noch herzustellende Objektquerschnitte zur Verfügung zu stellen. Insbesondere müssen im zweiten Schritt erzeugte Datenmodelle nicht einzeln für einen additiven Herstellvorgang bereitgestellt werden. Vielmehr können auch mehrere erzeugte Datenmodelle zunächst gesammelt und anschließend in ihrer Gesamtheit zur Integration in einen Steuerdatensatz bereitgestellt werden.

Insbesondere kann die Vorrichtung zur Bereitstellung von Steuerdaten auch in eine additive Herstellvorrichtung integriert sein und mit einer Steuereinrichtung in der additiven Herstellvorrichtung zusammenwirken.

Eine erfindungsgemäße Vorrichtung zur computergestützten Ansteuerung einer Anzahl von Energieeintragseinrichtungen einer additiven Herstellvorrichtung zur Herstellung eines dreidimensionalen Objekts mittels derselben,
wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparametern entlang einer Anzahl von Verfestigungsbahnen abgetastet werden, ist so ausgelegt, dass ein Verfestigen des Aufbaumaterials durch Bewegen zumindest eines Strahlungseinwirkbereichs entlang zumindest einer Verfestigungsbahn so stattfindet, dass während einer Änderung des Geschwindigkeitsvektors der Bewegung eines Strahlungseinwirkbereichs auf dem Aufbaumaterial entlang der Verfestigungsbahn eine zumindest einmalige Abänderung zumindest eines Wertes eines Energieeintragsparameters aus dem Satz von Energieeintragsparameterwerten spezifiziert ist.

Die Vorrichtung zur computergestützten Ansteuerung einer Anzahl von Energieeintragseinrichtungen kann alleine mittels Software-Komponenten, mittels einer Mischung aus Hardware- und Softwarekomponenten oder sogar alleine mittels Hardwarekomponenten realisiert werden. Eine alleine mittels Softwarekomponenten realisierte Vorrichtung kann zur Herstellung eines dreidimensionalen Objekts insbesondere mit einer Steuereinrichtung in einer additiven Herstellvorrichtung interagieren oder in solch eine Steuereinrichtung integriert sein. Mittels der Vorrichtung zur computergestützten Ansteuerung einer Anzahl von Energieeintragseinrichtungen kann die Bauteilhomogenität von durch ein additives Herstellverfahren hergestellten Objekten verbessert werden. Insbesondere kann die Vorrichtung eine Herstellung von Objekten durch ein additives Herstellverfahren unter Zugrundelegung eines Steuerdatensatzes implementieren, der mittels eines erfindungsgemäßen Verfahrens zur Bereitstellung von Steuerdaten generiert wurde.

Eine erfindungsgemäße additive Herstellvorrichtung zur Herstellung eines dreidimensionalen Objekts, wobei in der additiven Herstellvorrichtung das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparametern entlang einer Anzahl von Verfestigungsbahnen abgetastet werden, weist auf:
eine Schichtaufbringvorrichtung, die geeignet ist, eine Schicht eines Aufbaumaterials auf eine bereits vorhandene, bevorzugt bereits selektiv verfestigte, Aufbaumaterialschicht aufzubringen,
eine Energieeintragsvorrichtung, die geeignet ist, dem Querschnitt des Objekts in einer Schicht zugeordneten Stellen Strahlungsenergie zuzuführen, indem diese Stellen mit mindestens einem Strahlungseinwirkbereich gemäß einem Satz von Energieeintragsparameterwerten entlang einer Anzahl von Verfestigungsbahnen abgetastet werden,
wobei die erfindungsgemäße additive Herstellvorrichtung eine erfindungsgemäße Vorrichtung zur computergestützten Ansteuerung einer Anzahl von Energieeintragseinrichtungen einer additiven Herstellvorrichtung zur Herstellung eines dreidimensionalen Objekts mittels derselben aufweist und/oder mit einer erfindungsgemäße Vorrichtung zur computergestützten Ansteuerung einer Anzahl von Energieeintragseinrichtungen einer additiven Herstellvorrichtung zur Herstellung eines dreidimensionalen Objekts mittels derselben signaltechnisch verbunden ist.

Eine Energieeintragseinrichtung kann hierbei eine Anzahl von Strahlungsquellen zur Erzeugung von Strahlung, z.B. elektromagnetischer Strahlung oder Teilchenstrählung, sowie eine damit verbundene Anzahl von Strahlablenk- oder -umlenkeinrichtungen zum Richten der Strahlung auf das Aufbaumaterial umfassen. Insbesondere ist bevorzugt einer Strahlablenkeinrichtung genau ein Strahlungseinwirkbereich auf dem Aufbaumaterial zugeordnet. Bei den Strahlungsquellen kann es sich beispielsweise um einen oder mehrere Gas- oder Festkörperlaser oder jede andere Art von Lasern wie z.B. Laserdioden, insbesondere VCSELn (Vertical Cavity Surface Emitting Laser) oder VECSELn (Vertical External Cavity Surface Emitting Laser) oder eine Zeile dieser Laser handeln.

Bevorzugt ist bei der additiven Herstellvorrichtung die Energieeintragseinrichtung geeignet, eine Variation der Strahlungsleistung pro Flächeneinheit innerhalb des Strahlungseinwirkbereichs mittels Überlagerung unterschiedlicher Strahlen, insbesondere Laserstrahlen, zu bewirken.

Mittels solch einer additiven Herstellvorrichtung kann auf einfache Weise die Strahlungsleistung pro Flächeneinheit innerhalb eines Strahlungseinwirkbereichs variiert werden, was insbesondere bei einer Anpassung der Variation an eine geänderte Geschwindigkeitsverteilung innerhalb eines Strahlungseinwirkbereichs von Vorteil ist.

Alternativ kann auch die Energieeintragseinrichtung ein Strahlmodulationselement aufweisen, das geeignet ist, eine Variation der Strahlungsleistung pro Flächeneinheit innerhalb des Strahlungseinwirkbereichs zu bewirken. Als Strahlmodulationselement kann beispielsweise ein Lichtmodulator (engl.: "spatial light modulator (SLM)") dienen, mit dem die Intensität innerhalb des Strahlbündels variiert wird. Beispiele für solche Lichtmodulatoren sind kommerziell erhältliche Mikrospiegelaktoren (engl.: "digital micromirror devices"), LCoS-Vorrichtungen (engl.: "liquid crystal on silicon"), MOEMS (engl.: "micro opto-electro-mechanical systems") oder Grating Light Valves. Bei einer bevorzugten Ausführung ist die Energieeintragseinrichtung in der Lage, eine Abänderung der Intensitätsverteilung innerhalb eines Zeitraums zu bewirken, der kleiner als 100 ms, bevorzugt kleiner als 10 ms, besonders bevorzugt kleiner als 1 ms ist.

Eine weitere Alternative besteht in einer Energieeintragseinrichtung, die geeignet ist, eine nicht rotationssymmetrische Variation der Strahlungsleistung pro Flächeneinheit innerhalb des Strahlungseinwirkbereichs zu bewirken. Sobald eine nicht rotationssymmetrische Intensitätsverteilung im Strahlbündel vorliegt, wobei das Strahlbündel beispielsweise aus zwei voneinander separaten, einander überlagerten Strahlen erzeugt werden kann, kann durch eine Rotation des Strahlbündels relativ zur Richtung des Geschwindigkeitsvektors der Bewegung des Strahlbündels an unterschiedlichen Stellen des Strahlungseinwirkbereichs, die sich mit unterschiedlicher Geschwindigkeit bewegen, ein unterschiedlicher Energiebetrag pro Flächeneinheit zugeführt werden. Auch hier ist die Energieeintragseinrichtung bevorzugt in der Lage, eine Abänderung der Intensitätsverteilung innerhalb eines Zeitraums zu bewirken, der kleiner als 100 ms, bevorzugt kleiner als 10 ms, besonders bevorzugt kleiner als 1 ms ist.

Ein erfindungsgemäßes Computerprogramm weist Programmcodemittel auf, um alle Schritte eines erfindungsgemäßen computergestützten Verfahrens zur Bereitstellung von Steuerdaten für eine additive Herstellvorrichtung zur Herstellung eines dreidimensionalen Objekts auszuführen, wenn das Computerprogramm mittels eines Datenprozessors, insbesondere eines mit einer additiven Herstellvorrichtung zusammenwirkenden Datenprozessors, ausgeführt wird.

"Zusammenwirken" heißt hierbei, dass der Datenprozessor entweder in die additive Herstellvorrichtung integriert ist oder mit ihr Daten austauschen kann. Die Implementierung des erfindungsgemäßen Verfahrens zur Bereitstellung von Steuerdaten sowie der zugehörigen Vorrichtung mittels Software ermöglicht eine einfache Installierbarkeit auf verschiedenen EDV-Systemen an verschiedenen Orten (beispielsweise beim Ersteiler des Designs des Objekts oder aber beim Betreiber der additiven Herstellvorrichtung).

Weitere Merkmale und Zweckmäßigkeiten der Erfindung ergeben sich aus der Beschreibung von Ausführungsbeispielen anhand der beigefügten Figuren.
Fig. 1 zeigt eine schematische, teilweise im Schnitt dargestellte Ansicht einer beispielhaften Vorrichtung zum additiven Herstellen eines dreidimensionalen Objekts gemäß einer Ausführungsform der Erfindung,
Fig. 2 zeigt schematisch eine Verfestigungsbahn zur beispielhaften Erläuterung eines erfindungsgemäßen Vorgehens,
Fig. 3 zeigt schematisch eine Verfestigungsbahn zur Erläuterung eines weiteren Beispiels eines erfindungsgemäßen Vorgehens,
Fig. 4 zeigt schematisch eine Verfestigungsbahn zur beispielhaften Erläuterung eines erfindungsgemäßen Vorgehens im Falle einer abrupten Richtungsänderung,
Fig. 5 zeigt schematisch eine Verfestigungsbahn zur beispielhaften Erläuterung eines erfindungsgemäßen Vorgehens im Falle einer Krümmung,
Fig. 6 veranschaulicht den Ablauf eines Verfahrens zur Bereitstellung von Steuerdaten,
Fig. 7 zeigt den schematischen Aufbau einer Vorrichtung zur Bereitstellung von Steuerdaten,
Fig. 8 zeigt ein der Anmelderin bekanntes Vorgehen zum Abtasten eines Objektquerschnitts mit Energiestrahlung und
Fig. 9 zeigt schematisch ein Beispiel zur Veranschaulichung einer Situation, in der die Variation der Intensitätsverteilung innerhalb des Strahlbündels vorteilhaft ist.

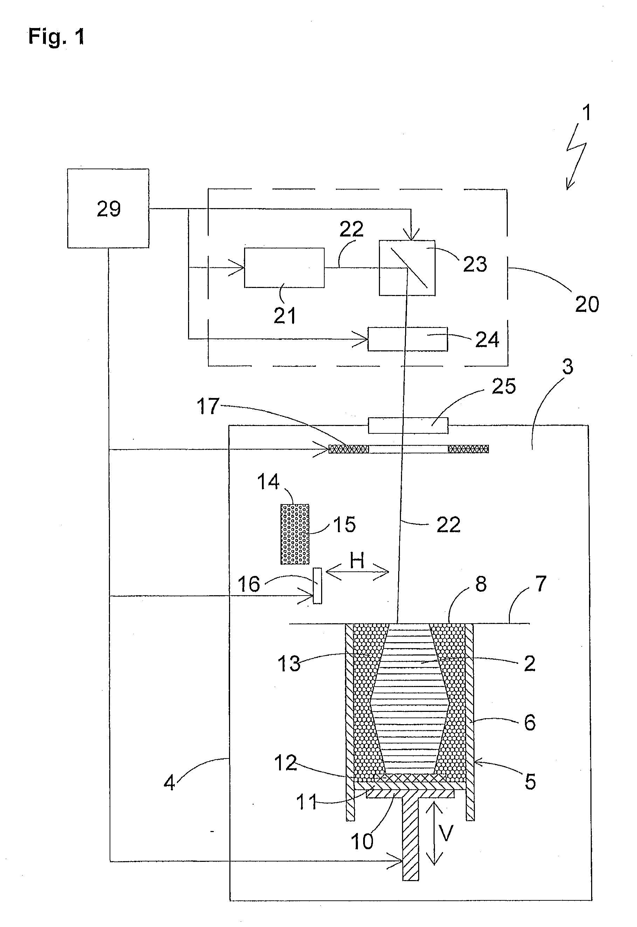

Für eine Beschreibung der Erfindung soll zunächst nachfolgend am Beispiel einer Lasersinter- oder -schmelzvorrichtung eine erfindungsgemäße additive Herstellvorrichtung unter Bezugnahme auf Fig. 1 beschrieben werden.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 ausgebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersinter- oder -schmelzvorrichtung 1 enthält weiterhin einen Vorratsbehälter 14 für ein Aufbaumaterial 15, in diesem Beispiel ein durch elektromagnetische Strahlung verfestigbares Pulver, und einen in einer horizontalen Richtung H bewegbaren Beschichter 16 zum Aufbringen des Aufbaumaterials 15 innerhalb des Baufelds 8. Optional kann in der Prozesskammer 3 eine Heizvorrichtung, z.B. eine Strahlungsheizung 17 angeordnet sein, die zum Beheizen des aufgebrachten Aufbaumaterials dient. Als Strahlungsheizung 17 kann beispielsweise ein Infrarotstrahler vorgesehen sein.

Die beispielhafte additive Herstellvorrichtung 1 enthält ferner eine Energieeintragseinrichtung 20 mit einem Laser 21, der einen Laserstrahl 22 erzeugt, welcher über eine Umlenkvorrichtung 23 umgelenkt wird und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Beim Lasersintern oder Laserschmelzen kann eine Energieeintragseinrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser aufweisen. Der in Fig. 1 gezeigte spezifische Aufbau einer Lasersinter- oder -schmelzvorrichtung ist daher für die vorliegende Erfindung nur beispielhaft und kann natürlich auch abgewandelt werden, insbesondere bei Verwendung einer anderen Energieeintragseinrichtung als der gezeigten.

Die Lasersintervorrichtung 1 enthält weiterhin eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der additiven Herstellvorrichtung angebracht sein. Die Steuereinrichtung kann eine CPU enthalten, deren Betrieb durch ein Computerprogramm (Software) gesteuert wird. Das Computerprogramm kann getrennt von der additiven Herstellvorrichtung in einer Speichervorrichtung gespeichert sein, von wo aus es (z.B. über ein Netzwerk) in die additive Herstellvorrichtung, insbesondere in die Steuereinrichtung, geladen werden kann.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Alle im weiteren Verlauf gemachten Ausführungen gelten nicht nur für Lasersinter- oder -schmelzvorrichtungen, sondern auch für anders geartete additive Herstellvorrichtungen, bei denen Wärmeenergie mittels Strahlung in das Aufbaumaterial eingetragen wird.

In der soeben beispielhaft beschriebenen additiven Herstellvorrichtung geht ein Herstellvorgang so vonstatten, dass die Steuereinheit 29 einen Steuerdatensatz abarbeitet.

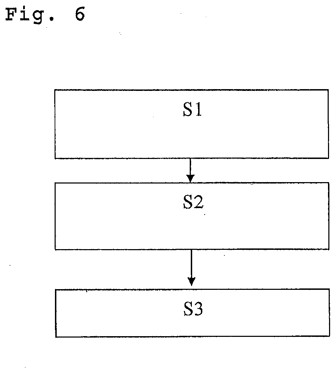

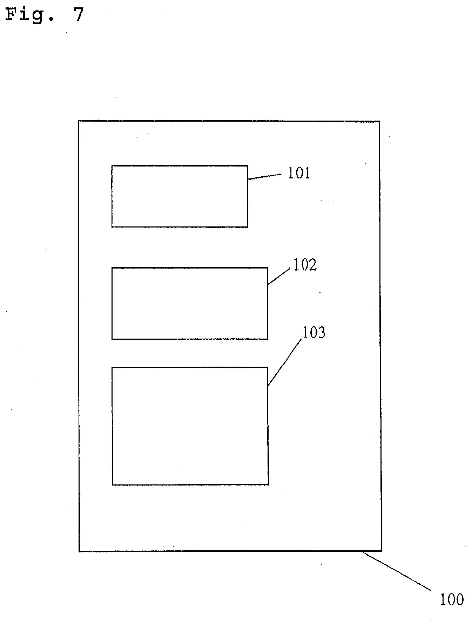

Durch den Steuerdatensatz wird einer Energieeintragseinrichtung, im Falle der obigen Lasersinter- oder Laserschmelzvorrichtung speziell der Umlenkvorrichtung 23, für jeden Zeitpunkt während des Verfestigungsvorgangs vorgegeben, auf welche Stelle der Arbeitsebene 7 Strahlung zu richten ist. Wie in Fig. 7 gezeigt, enthält eine Vorrichtung 100 zur Bereitstellung von Steuerdaten für eine additive Herstellvorrichtung eine Datenzugriffseinheit 101, eine Datenmodell-Erzeugungseinheit 102, und eine Steuerdaten-Bereitstellungseinheit 103. Die Funktionsweise der Vorrichtung 100 zur Bereitstellung von Steuerdaten wird unter Bezugnahme auf Fig. 6 beispielhaft beschrieben.

In der in Fig. 7 gezeigten Vorrichtung 100 zur Bereitstellung von Steuerdaten für eine additive Herstellvorrichtung greift zunächst die Datenzugriffseinheit 101 auf eine Anzahl, also einen oder mehrere, von Schichtdatensätzen zu, von denen jeder ein Datenmodell eines während der Herstellung selektiv zu verfestigenden Bereichs einer Aufbaumaterialschicht, bevorzugt des gesamten zu verfestigenden Bereichs einer Aufbaumaterialschicht aufweist, der einem Querschnitt eines Objektabschnitts entspricht. In dem in Fig. 6 gezeigten Verfahrensablauf ist dies der erste Schritt S1.

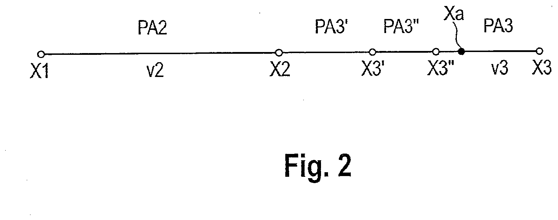

In dem in Fig. 6 gezeigten zweiten Schritt S2 spezifiziert nun die Datenmodell-Erzeugungseinheit 102 in einem Datenmodell eines selektiv zu verfestigenden Bereichs Stellen einer Aufbaumaterialschicht, auf die der Laserstrahl nacheinander gerichtet werden soll, und Strahlungsparameter für den Laserstrahl während der Bewegung von einer Stelle zur nächsten. Das Vorgehen wird anhand von Fig. 2 erläutert. Fig. 2 zeigt schematisch eine Verfestigungsbahn, die sich geradlinig von der Stelle X1 der Arbeitsebene 7 zur Stelle X3 erstreckt. Da die Figur lediglich eine schematische Darstellung ist, ist die in der Realität vorhandene Breite der Verfestigungsbahn in einer Richtung senkrecht zu ihrer Längserstreckung in der Arbeitsebene 7 nicht wiedergegeben. Bei dem Beispiel der Fig. 2 soll der Laserstrahl-Einwirkbereich von der Stelle X1 zur Stelle X2 mit der Geschwindigkeit v2 bewegt werden, und von der Stelle X2 zur Stelle X3 mit der Geschwindigkeit v3 bewegt werden. Diese Informationen können entweder bereits in den Modelldaten vorhanden sein, auf die im ersten Schritt S1 zugegriffen wird, oder aber die Datenmodell-Erzeugungseinheit 102 fügt diese Information zu den Modelldaten, auf die im ersten Schritt S1 zugegriffen wurde, zum Erzeugen eines Datenmodells hinzu. In ersterem Falle ermittelt die Datenmodell-Erzeugungseinheit 102, ob die Geschwindigkeit v3 unterschiedlich zur Geschwindigkeit v2 ist. Im zweiten Fall ist solch eine Ermittlung nicht notwendig, da unterschiedliche Geschwindigkeiten v2 und v3 bewusst in Abhängigkeit von der Bauteilgeometrie gewählt werden können.

Selbst wenn in den Steuerdaten ein abrupter Wechsel der Geschwindigkeit von v2 zur Geschwindigkeit v3 an der Stelle X2 spezifiziert wird, wird in der additiven Herstellvorrichtung sich nicht die Geschwindigkeit instantan am Ort X2 ändern. Der Grund ist, dass in einer additiven Herstellvorrichtung zum Einsatz kommende Strahlablenkvorrichtungen (Scan-Vorrichtungen) nicht instantan eine Geschwindigkeitsänderung durchführen können. Infolge der von Null verschiedenen Masse der beweglichen Teile in einer Strahlablenkvorrichtung wird für eine Geschwindigkeitsänderung ein von Null verschiedener Zeitraum ta benötigt. Innerhalb dieses Zeitraums ändert sich der Betrag der Geschwindigkeit von v2 zu v3. Wenn während dieses Zeitraums ta die für das Laserstrahlbündel spezifizierte Strahlungsleistung pro Flächeneinheit PA3 spezifiziert wird, dann ist innerhalb des Zeitraums ta die Strahlungsleistung pro Flächeneinheit nicht an die Bewegungsgeschwindigkeit des Strahlungseinwirkbereichs angepasst. Die Strahlungsleistung pro Flächeneinheit PA3 ist nämlich an eine Bewegungsgeschwindigkeit v3 angepasst. Die Nichtanpassung führt dazu, dass die Eigenschaften des herzustellenden Objekts, insbesondere die Materialeigenschaften, während des Zeitraums ta von den Eigenschaften des herzustellenden Objekts während des Zeitraums, in dem sich der Strahlungseinwirkbereich tatsächlich mit der Geschwindigkeit v3 entlang der Verfestigungsbahn bewegt, abweichen. Um für homogenere Objekteigenschaften zu sorgen, schlagen daher die Erfinder in diesem Beispiel vor, während des Zeitraums ta für eine Strahlungsleistung pro Flächeneinheit PA im Einwirkbereich des Laserstrahls auf das Aufbaumaterial einen Wert zu spezifizieren, der zwischen den spezifizierten Werten PA2 und PA3 vor und nach der Geschwindigkeitsänderung liegt. Das Vorgehen wird nachfolgend an einem Beispiel erläutert:
Zunächst wird angenommen, dass in den Modelldaten vor der Durchführung des zweiten Schritts S2 für die Ansteuerung der additiven Herstellvorrichtung der folgende Steuerbefehl spezifiziert ist:
   (X3, v3, PA3),
wobei dieser Steuerbefehl spezifizieren soll, dass ausgehend von der Stelle X2 der Laserstrahl zur Stelle X3 innerhalb des Baufelds 8 mit der Geschwindigkeit v3 bewegt werden soll und während der Bewegung die (mittlere) Strahlungsleistung pro Flächeneinheit PA3 im Strahlungseinwirkbereich auf dem Aufbaumaterial vorhanden sein soll. Bei einer Abweichung der Geschwindigkeit v3 von der vorherigen Geschwindigkeit v2 wird dann wie folgt vorgegangen:
   Zunächst wird ermittelt, wie lange die Strahlablenkvorrichtung 23 in der additiven Herstellvorrichtung für die Umstellung von der Geschwindigkeit v2 zur Geschwindigkeit v3 benötigt. Als Nächstes werden innerhalb der ermittelten Zeitdauer ta ein oder mehrere Zwischenwerte PA3', PA3", etc. spezifiziert. Dies kann dadurch geschehen, dass dem oben genannten Steuerbefehl weitere Steuerbefehle vorangestellt werden, die zeitlich vorher ausgeführt werden sollen. Die im zweiten Schritt S2 erzeugten Daten hätten dann beispielsweise das folgende Aussehen:
   (X3', v3, PA3', ...)
   (X3", v3, PA3", ...)
   (X3, v3, PA3, ...).

Wie in Fig. 2 veranschaulicht, werden also in dem Beispiel zwei weitere Bewegungsvektoren bzw. zwei weitere Zielpunkte X3' und X3" eingeführt, die innerhalb der ermittelten Zeitdauer ta erreicht werden. In Fig. 2 kennzeichnet dabei die Stelle Xa die Erreichung der tatsächlichen Geschwindigkeit v3 nach Ablauf der Zeitdauer ta. Durch das geschilderte Vorgehen können die Werte für die Strahlungsleistung pro Flächeneinheit im Strahlungseinwirkbereich besser an die tatsächlich vorherrschende Bewegungsgeschwindigkeit des das Aufbaumaterial abtastenden Strahlungseinwirkbereichs angepasst werden. Es sei hier angemerkt, dass für die Erfindung insbesondere das Vorgeben von Zwischenwerten PA3', PA3" für die Strahlungsleistung pro Flächeneinheit von Bedeutung ist.

Wie viele Zwischenbefehle eingefügt werden, hängt davon ab, wie hoch die Anforderungen an die Homogenität des herzustellenden Objekts sind. Je mehr Zwischenbefehle eingefügt werden, desto genauer lässt sich die Strahlungsleistung pro Flächeneinheit an die tatsächlich vorhandene Geschwindigkeit anpassen und somit eine größere Homogenität erzielen. Die Anzahl der maximal einfügbaren Steuerbefehle wird allenfalls durch die Ansteuerfrequenz einer Energieeintragseinrichtung begrenzt.

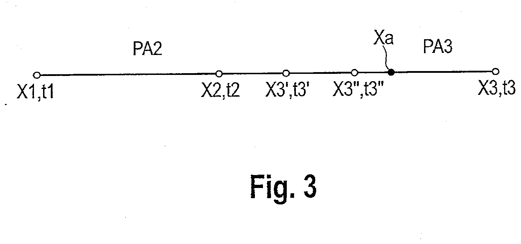

Fig. 3 veranschaulicht ein weiteres Beispiel eines Vorgehens, durch das eine Homogenität der Bauteileigenschaften verbessert werden kann. Im Beispiel der Fig. 3 wird angenommen, dass die Modelldaten, auf die im ersten Schritt S1 zugegriffen wird, eine Ansteuerung der Energieeintragseinrichtung 20 dergestalt spezifizieren, dass Stellen Xi innerhalb des Baufelds 8 spezifiziert werden, auf die der Einwirkbereich des Laserstrahls während seiner Bewegung entlang einer Verfestigungsbahn zu spezifizierten Zeitpunkten ti zu richten ist. Die Steuerdaten in den Modelldaten, auf die im ersten Schritt S1 zugegriffen wird, könnten also beispielsweise folgendermaßen aussehen:
(X3, t3, PA3, ...).

Die Geschwindigkeit, mit der der Strahlungseinwirkbereich zwischen den Punkten X1 und X2 bzw. X2 und X3 in Fig. 3 bewegt wird, hängt dann von der Distanz zwischen X1 und X2 bzw. X2 und X3 sowie von den Zeitdifferenzen t2-t1 bzw. t3-t2 ab. Dabei wäre es möglich vorzugeben, dass die Steuereinheit 29 die nächste anzusteuernde Stelle Xi stets mit maximal möglicher Geschwindigkeit anzusteuern versucht. Alternativ könnte die Steuereinheit aus der vorgegebenen Zeitdifferenz und dem vorgegebenen räumlichen Abstand zweier nacheinander zu bestrahlender Stellen eine mittlere Geschwindigkeit errechnen und den Strahl mit dieser mittleren Geschwindigkeit von einer Stelle zur nächsten bewegen. In letzterem Falle ergäben sich ähnlich wie beim Beispiel der Fig. 2 unterschiedliche Geschwindigkeiten für unterschiedliche Abschnitte der Verfestigungsbahn. Analog zu dem Beispiel von Fig. 2 könnte wiederum ein Zeitraum ta ermittelt werden, innerhalb dessen sich die Geschwindigkeit ändert, und innerhalb dieses Zeitraums ta eine geänderte Strahlungsleistung pro Flächeneinheit PA vorgegeben werden. Analog zum Beispiel der Fig. 2 könnten also im zweiten Schritt die folgenden Steuerdaten erzeugt werden:
(X1, t1, PA1, ...)
(X2, t2, PA2, ...)
(X3', t3', PA3' ...)
(X3", t3", PA3" ...)
(X3, t3, PA3 ...).

Der zeitliche Abstand der Zeitpunkte t3' und t3" vom Zeitpunkt t2 wäre dabei geringer als die ermittelte Zeitdauer ta, innerhalb derer sich die Geschwindigkeit ändert. Wiederum wäre die erzielbare Verbesserung der Bauteilhomogenität umso besser, je präziser die Strahlungsleistung pro Flächeneinheit an die jeweilige Geschwindigkeit des Strahlungseinwirkbereich angepasst werden kann, was insbesondere dann der Fall ist, wenn möglichst viele unterschiedliche Werte für die Strahlungsleistung pro Flächeneinheit innerhalb des Zeitraums ta spezifiziert werden. Wiederum kennzeichnet die Stelle Xa das Erreichen der Geschwindigkeit v3.

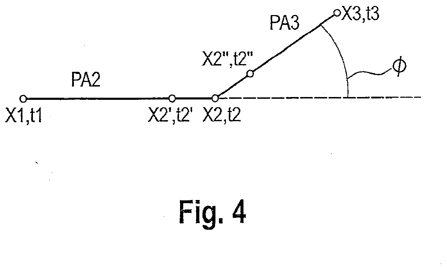

Fig. 4 zeigt ein Beispiel, bei dem in den Modelldaten, auf die im ersten Schritt S1 zugegriffen wird, Stellen ermittelt werden, an denen eine Verfestigungsbahn einen Knick aufweist, an denen also beim Bewegen des Laserstrahls entlang der Verfestigungsbahn eine abrupte Richtungsänderung auftritt. Der Einfachheit halber erstreckt sich die Verfestigungsbahn in Fig. 4 zwischen den Punkten X1 und X3, wobei die abrupte Richtungsänderung an der Stelle X2 auftritt. Insbesondere wenn der am Außenrand eines Objektquerschnitts liegende Konturbereich abgetastet werden soll, wird oftmals der Strahlungseinwirkbereich entlang der Konturlinie verfahren. In Fig. 8 ist der Konturbereich eine rechteckige Linie 51. An den Ecken dieses Rechtecks wird beim Bewegen des Strahlungseinwirkbereichs der 90°-Winkel umso präziser ausgebildet, je langsamer der Strahlungseinwirkbereich an den Ecken über das Aufbaumaterial bewegt wird. Der Grund ist, dass infolge der Trägheit der Strahlablenkvorrichtung 23 instantane Richtungsänderungen nicht möglich sind. Je schneller der Strahlungseinwirkbereich an den Ecken über das Aufbaumaterial bewegt wird, desto verrundeter werden die Ecken der Kontur des Objektquerschnitts ausgebildet. Die gleichen Verhältnisse liegen auch für andere Objektquerschnitte vor, bei denen die Außenkontur nicht die Form eines Rechtecks aufweist. Ebenfalls ist es denkbar, dass auch innerhalb eines Objektquerschnitts, beispielsweise innerhalb eines Teilbereichs 53 in Fig. 8 eine Verfestigungsbahn Knicke aufweist.

Im Beispiel der Fig. 4 wird durch die Vorrichtung 100 zur Bereitstellung von Steuerdaten, die in Fig. 8 gezeigt ist, in den Modelldaten, auf die von der Datenzugriffseinheit 101 zugegriffen wurde, das Vorhandensein von Knicken (abrupten Richtungsänderungen) entlang einer Verfestigungsbahn ermittelt. Da, wie vorstehend erläutert, im Bereich der Knicke die Bewegungsgeschwindigkeit des Strahlungseinwirkbereichs verringert werden sollte, kann aus dem Vorhandensein von Knicken geschlossen werden, dass in den Bereichen der Knicke Änderungen der Bewegungsgeschwindigkeit auftreten, ohne den Verlauf der Geschwindigkeitsänderung im Detail analysieren zu müssen. Im Beispiel der Fig. 4 werden basierend auf Erfahrungswerten mit der additiven Herstellvorrichtung, für die Steuerdaten bereitgestellt werden sollen, zusätzliche Werte für die Strahlungsleistung pro Flächeneinheit nahe dem Punkt der abrupten

Richtungsänderung spezifiziert. Im Beispiel der Fig. 4 werden also durch die Datenmodell-Erzeugungseinheit 102 folgende Steuerbefehle generiert:
(X2', t2', PA2', ...)
(X2, t2, PA2, ...)
(X2", t2", PA2", ...).

Dabei wird angenommen, dass die Strahlungsleistung pro Flächeneinheit PA2' geringer ist als die Strahlungsleistung pro Flächeneinheit PA2, und die Strahlungsleistung pro Flächeneinheit PA2" geringer ist als die Strahlungsleistung pro Flächeneinheit PA3, da im Bereich der Stelle X2 die Bewegungsgeschwindigkeit verringert ist. Die Lage der spezifizierten Stellen X2' und X2" resultiert beispielsweise aus Erfahrungswerten mit der Strahlablenkvorrichtung 23 bei Richtungsänderungen oder kann auch einfach festgelegt werden. Dabei wird oftmals das Ausmaß, um das die Geschwindigkeit im Bereich einer Richtungsänderungsstelle verringert wird, vom Betrag des Richtungsänderungswinkels Φ abhängen. Entsprechend hängen dann auch die Positionen X2', X2" und die Strahlungsleistungen pro Flächeneinheit PA2' und PA2" von dem Richtungsänderungswinkel Φ ab.

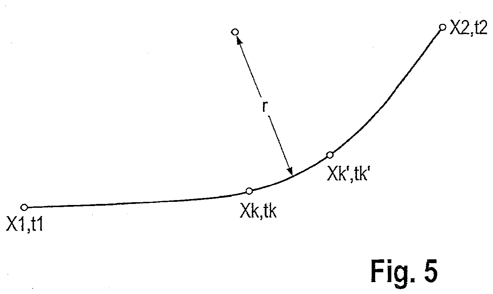

Fig. 5 zeigt das Beispiel einer zwischen den Stellen X1 und X2 verlaufenden Verfestigungsbahn, die eine Krümmung aufweist, ohne dass es abrupte Richtungsänderungen gibt. Abhängig davon, wie groß ein Krümmungsradius r ist (der Kehrwert des Krümmungsradius r ist als Krümmung κ definiert), wird aufgrund der Trägheit der Strahlablenkvorrichtung 23 die Bewegungsgeschwindigkeit eines Strahlungseinwirkbereichs vorteilhafterweise abgesenkt werden, wenn kleine Krümmungsradien durchlaufen werden. Eine Vorrichtung zur Bereitstellung von Steuerdaten 100 in Fig. 7 kann daher in den von der Datenzugriffseinheit 101 entgegengenommenen Modelldaten Krümmungsradien r bzw. Krümmungen κ ermitteln und in Abhängigkeit vom ermittelten Wert für den Krümmungsradius r oder die Krümmung κ verringerte Werte für die Strahlungsleistung pro Flächeneinheit PA spezifizieren. Im Beispiel der Fig. 5 sind im Bereich der Krümmung zwei zusätzliche Stellen Xk und Xk' spezifiziert, an denen in Annahme einer verringerten Bewegungsgeschwindigkeit des Strahlungseinwirkbereichs verringerte Werte für die Strahlungsleistung pro Flächeneinheit PAk und PAk' spezifiziert sind:
(Xk, tk, PAk, ...)
(Xk', tk', PAk', ...).

An welchen Stellen Xk, Xk' welche Werte PAk, PAk' spezifiziert werden müssen, ergibt sich aus Erfahrungswerten mit der Strahlablenkvorrichtung 23 in der additiven Herstellvorrichtung, für welche die Steuerdaten spezifiziert werden.

Nachdem im zweiten Schritt S2 in Fig. 6 zumindest ein Datenmodell erzeugt wurde, werden anschließend durch die in Fig. 7 gezeigte Steuerdaten-Bereitstellungseinheit 103 Steuerdaten für die Generierung eines Steuerdatensatzes bereitgestellt. Dabei kann entweder das im zweiten Schritt S2 erzeugte, zumindest eine Datenmodell als Steuerinformation (Steuerdaten) bereitgestellt werden oder aber das Datenmodell wird für eine bessere Integrierbarkeit in einen Steuerdatensatz umformatiert.

Selbst wenn in den obigen Beispielen zur Beschreibung des erfindungsgemäßen Vorgehens in der Regel auf eine anzustrebende Strahlungsleistung pro Flächeneinheit abgestellt wird, ist die Erfindung nicht hierauf beschränkt. Denkbar sind auch Änderungen von Energieeintragsparameterwerten zur Einstellung von z. B. der Fokussierungstiefe der verwendeten Strahlung also der Lage der Fokalebene relativ zur Arbeitsebene bzw. der Gestalt oder Größe eines Strahlungseinwirkbereichs.

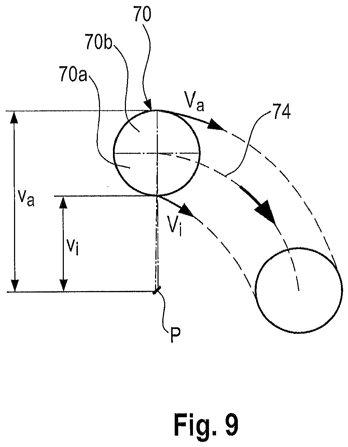

Insbesondere kann auch durch eine Abänderung der Intensitätsverteilung innerhalb des Strahlungseinwirkbereichs für eine Verbesserung der Bauteilhomogenität gesorgt werden, wie nachfolgend anhand von Fig. 9 veranschaulicht wird. Fig. 9 zeigt schematisch die Bewegung eines Strahlungseinwirkbereichs 70 entlang einer gekrümmten Verfestigungsbahn 74. In dem gezeigten Beispiel bewegt sich der Strahlungseinwirkbereich 70 entlang eines Viertelkreises um den Punkt P. Man erkennt dabei in Fig. 9, dass die Bahn des dem Punkt P nächstgelegenen Endes des Strahlungseinwirkbereichs 70 einen geringeren Krümmungsradius rᵢ aufweist, als die Bahn des am weitesten vom Punkt P entfernten Endes des Strahlungseinwirkbereichs 70, welche einen Krümmungsradius ra aufweist. Entsprechend, da die Winkelgeschwindigkeit für alle Stellen des Strahlungseinwirkbereichs 70 gleich ist, ist die Geschwindigkeit va der Bewegung des am weitesten vom Punkt P entfernten Endes des Strahlungseinwirkbereichs 70 größer als die Geschwindigkeit vᵢ der Bewegung des dem Punkt P nächstgelegenen Endes des Strahlungseinwirkbereichs 70. Die übrigen Stellen des Strahlungseinwirkbereichs 70 weisen bei der gezeigten Bewegung Geschwindigkeiten zwischen vi und va auf.

Unterschiedliche Bewegungsgeschwindigkeiten unterschiedlicher Stellen des Strahlungseinwirkbereichs 70 führen selbst bei einer während der Bewegung konstant gehaltenen Intensitätsverteilung im Strahlbündel dazu, dass als Folge den unterschiedlichen Stellen des Strahlungseinwirkbereichs 70 unterschiedlich viel Energie zugeführt wird. Während dies für geringe Abmessungen des Strahlungseinwirkbereichs 70 in Kauf genommen werden kann (bei einem nahezu punktförmigen Laserspot), wird die resultierende Inhomogenität des Energieeintrags umso größer, je größer die Variation des Krümmungsradius der Bewegung innerhalb des Strahlungseinwirkbereichs 70 ist.

Man kann dem soeben geschilderten Problem dadurch begegnen, dass durch die Abänderung zumindest eines Wertes eines Energieeintragsparameters die Intensitätsverteilung innerhalb eines zur Zufuhr der Strahlungsenergie zum Strahlungseinwirkbereich dienenden Strahlbündels abgeändert wird. Derartige Abänderungen der Intensitätsverteilung lassen sich beispielsweise durch in den Strahlengang eingebrachte Lichtmodulatoren bewerkstelligen. Solche Lichtmodulatoren (engl.: "spatial light modulators (SLM)") sind im Stand der Technik bekannt, weshalb hier nicht auf weitere Details eingegangen wird.

Beispielsweise kann der Strahlungseinwirkbereich 70 in zwei Strahlungseinwirk-Unterbereiche 70a und 70b unterteilt werden, innerhalb derer eine homogene Intensitätsverteilung vorgesehen wird, wobei sich die beiden Intensitätsverteilungen aber dadurch unterscheiden, dass mindestens ein Wert eines Energieeintragsparameters unterschiedlich spezifiziert ist. In dem Beispiel von Fig. 9 liegt die Grenze zwischen den beiden Strahlungseinwirk-Unterbereichen 70a und 70b im Wesentlichen parallel zur Bewegungsrichtung, da die größten Geschwindigkeitsunterschiede innerhalb des Strahlungseinwirkbereichs 70 senkrecht zur Bewegungsrichtung auftreten. Mit welcher Auflösung bzw. welchem Detaillierungsgrad die Intensitätsverteilung innerhalb des Strahlungseinwirkbereichs variiert werden kann, also wie viele Strahlungseinwirkbereiche eingeführt werden können, hängt im Wesentlichen von der "Körnigkeit" der Lichtmodulation ab, mit anderen Worten davon, wie viele Lichtmodulator-Pixel dem Strahlungseinwirkbereich bei der Abtastung des Aufbaumaterials zugeordnet sind.

Eine Abänderung der Intensitätsverteilung innerhalb des Strahlungseinwirkbereichs ist umso wirkungsvoller, je stärker die Geschwindigkeit der einzelnen Stellen innerhalb eines Strahlungseinwirkbereichs während einer Richtungsänderung des Geschwindigkeitsvektors des gesamten Strahlungseinwirkbereichs variiert. Die Höhe der Variation hängt dabei von der Abmessung des Strahlungseinwirkbereichs senkrecht zur Bewegungsrichtung des Strahlbündels und der Krümmung der abgetasteten Verfestigungsbahn ab. Man kann beispielsweise auch einen Grenzwert in Form eines maximalen Unterschieds des Betrags der Geschwindigkeit zwischen zwei beliebigen Stellen innerhalb des Strahlungsauftreffbereichs definieren und Abänderungen der Intensitätsverteilung während einer Bewegung nur bei einer Überschreitung des Grenzwerts vornehmen.

Eine Möglichkeit, während der Bewegung des Strahlungseinwirkbereichs entlang einer gekrümmten Bahn (also bei Abänderung der Richtung des Geschwindigkeitsvektors), die Intensitätsverteilung zu ändern, ist z.B. auch die folgende: Falls eine asymmetrische (also nicht punkt- oder liniensymmetrische) Intensitätsverteilung innerhalb des Strahlungseinwirkbereichs vorliegt, so wird bei einer Änderung der Richtung des Geschwindigkeitsvektors der Bewegung die Intensitätsverteilung im Strahlungseinwirkbereich um einen Winkel rotiert. Die Rotation erfolgt dabei bevorzugt so, dass das globale Maximum oder zumindest ein lokales Maximum der Intensitätsverteilung in jenen Teilen des Strahlungseinwirkbereichs liegt, die sich mit der höchsten Geschwindigkeit bewegen.

Abschließend sei noch erwähnt, dass eine erfindungsgemäße Vorrichtung 100 zur Bereitstellung von Steuerdaten für eine additive Herstellvorrichtung nicht nur allein durch Softwarekomponenten, sondern auch allein durch Hardware-Komponenten oder Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die eingespeisten bzw. ausgegebenen Daten von bereits auf dem gleichen Gerät realisierten anderen Komponenten übernommen werden können, oder an eine andere Komponente nur softwaremäßig übergeben werden müssen. Ebenso könnten die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle, zusammengefasst sein.

## Patentansprüche

1. Computergestütztes Verfahren zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparameterwerten entlang einer Anzahl von Verfestigungsbahnen abgetastet werden,
wobei das Verfahren zur Bereitstellung von Steuerdaten aufweist:
einen ersten Schritt (S1) des Zugriffs auf computerbasierte Modelldaten zumindest eines Abschnitts des herzustellenden Objekts,
einen zweiten Schritt (S2) des Erzeugens zumindest eines Datenmodells eines zur Herstellung des zumindest einen Objektabschnitts selektiv zu verfestigenden Bereichs einer Aufbaumaterialschicht, wobei in dem Datenmodell ein Verfestigen des Aufbaumaterials durch ein Bewegen zumindest eines Strahlungseinwirkbereichs entlang zumindest einer Verfestigungsbahn spezifiziert ist,
wobei spezifiziert wird, dass während einer Änderung eines Geschwindigkeitsvektors der Bewegung eines Strahlungseinwirkbereichs auf dem Aufbaumaterial entlang der Verfestigungsbahn eine zumindest einmalige Abänderung zumindest eines Wertes eines Energieeintragsparameters aus dem Satz von Energieeintragsparameterwerten erfolgt,
wobei durch die Abänderung zumindest eines Wertes eines Energieeintragsparameters die Intensitätsverteilung innerhalb eines zur Zufuhr der Strahlungsenergie zum Strahlungseinwirkbereich dienenden Strahlbündels (22) abgeändert wird, und
einen dritten Schritt (S3), in dem Steuerdaten entsprechend dem im zweiten Schritt (S2) erzeugten zumindest einen Datenmodell für die Generierung eines Steuerdatensatzes für die additive Herstellvorrichtung bereitgestellt werden.

2. Verfahren nach Anspruch 1, bei dem ermittelt wird, ob eine Zeitdauer ta der Änderung des Geschwindigkeitsvektors bei der Bewegung des Strahlungseinwirkbereichs einen vorgegebenen Zeitdauer-Minimalwert taₘᵢₙ überschreitet, und bei dem nur für den Fall einer ermittelten Überschreitung des Zeitdauer-Minimalwerts taₘᵢₙ eine Abänderung zumindest eines Energieeintragsparameterwertes spezifiziert wird.

3. Verfahren nach Anspruch 1 oder 2, bei dem ermittelt wird, ob ein Richtungsänderungswinkel (ϕ) bei der Bewegung des Strahlungseinwirkbereichs entlang der Verfestigungsbahn einen vorgegebenen Minimalwinkel ϕₘᵢₙ überschreitet, und bei dem nur für den Fall einer ermittelten Überschreitung des Minimalwinkels ϕₘᵢₙ eine Abänderung zumindest eines Energieeintragsparameterwertes spezifiziert wird.

4. Verfahren nach einem der vorangehenden Ansprüche, bei dem ermittelt wird, ob der Betrag der Krümmung κ eines Wegs des Strahlungseinwirkbereichs entlang der Verfestigungsbahn eine vorgegebene Minimalkrümmung κₘᵢₙ überschreitet, und bei dem nur für den Fall einer ermittelten Überschreitung der Minimalkrümmung κₘᵢₙ eine Abänderung zumindest eines Energieeintragsparameterwertes spezifiziert wird.

5. Verfahren nach einem der vorangehenden Ansprüche, bei dem spezifiziert wird, dass die Verfestigungsbahn auf und/oder entlang zumindest eines Teils einer Kontur eines Objektquerschnitts verläuft.

6. Verfahren nach einem der Ansprüche 1 bis 5, wobei die Abänderung der Intensitätsverteilung so erfolgt, dass die Fläche des Strahlungseinwirkbereichs im Wesentlichen gleich bleibt.

7. Verfahren nach einem der Ansprüche 1 bis 6, bei dem
der Strahlungseinwirkbereich (70) in mindestens zwei Strahlungseinwirk-Unterbereiche (70a, 70b) aufgeteilt wird und jedem der Strahlungseinwirk-Unterbereiche (70a, 70b) ein Unterbereichs-Geschwindigkeitsvektor zugeordnet wird, wobei
im Falle unterschiedlicher Unterbereichs-Geschwindigkeitsvektoren ein aus diesen unterschiedlichen Unterbereichs-Geschwindigkeitsvektoren resultierender unterschiedlicher Energieeintrag pro Flächeneinheit in den Strahlungseinwirk-Unterbereichen (70a, 70b) kompensiert wird, indem den Strahlungseinwirk-Unterbereichen (70a, 70b) unterschiedliche Werte zumindest eines Energieeintragsparameters zugewiesen werden.

8. Verfahren nach Anspruch 7, bei dem die Grenze zwischen einem Strahlungseinwirk-Unterbereich und einem daran angrenzenden Strahlungseinwirk-Unterbereich im Wesentlichen parallel zur Richtung des Geschwindigkeitsvektors des Strahlungseinwirkbereichs (70) verläuft.

9. Verfahren nach einem der Ansprüche 7 bis 8, bei dem der während der Bewegung eines Strahlungseinwirkbereichs (70) maximal zwischen unterschiedlichen Stellen innerhalb des Strahlungseinwirkbereichs vorhandene Unterschied zwischen Beträgen von Geschwindigkeiten an den Stellen ermittelt wird und eine Kompensation nur für den Fall erfolgt, dass der innerhalb des Strahlungseinwirkbereichs (70) vorhandene maximale Unterschied zwischen den Beträgen der Geschwindigkeiten einen vorgegebenen Grenzwert überschreitet.

10. Additives Herstellverfahren zur Herstellung eines dreidimensionalen Objekts, wobei das Objekt mittels einer additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparameterwerten entlang einer Anzahl von Verfestigungsbahnen abgetastet werden,
wobei der Ablauf des additiven Herstellverfahrens durch einen Steuerdatensatz gesteuert wird, der unter Verwendung eines Verfahrens nach einem der Ansprüche 1 bis 9 generiert wurde.

11. Vorrichtung zur Bereitstellung von Steuerdaten für eine additive Herstellvorrichtung zur Herstellung eines dreidimensionalen Objekts, wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparameterwerten entlang einer Anzahl von Verfestigungsbahnen abgetastet werden,
wobei die Vorrichtung zur Bereitstellung von Steuerdaten aufweist:
eine Datenzugriffseinheit (101), die ausgelegt ist zum Zugriff auf computerbasierte Modelldaten zumindest eines Abschnitts des herzustellenden Objekts,
eine Datenmodell-Erzeugungseinheit (102), die ausgelegt ist, zumindest ein Datenmodell eines zur Herstellung des zumindest einen Objektabschnitts selektiv zu verfestigenden Bereichs einer Aufbaumaterialschicht zu erzeugen, wobei in dem Datenmodell ein Verfestigen des Aufbaumaterials durch Bewegen zumindest eines Strahlungseinwirkbereichs entlang zumindest einer Verfestigungsbahn spezifiziert ist,
wobei während einer Änderung des Geschwindigkeitsvektors der Bewegung eines Strahlungseinwirkbereichs auf dem Aufbaumaterial entlang der Verfestigungsbahn eine zumindest einmalige Abänderung zumindest eines Wertes eines Energieeintragsparameters aus dem Satz von Energieeintragsparameterwerten spezifiziert ist,
wobei durch die Abänderung zumindest eines Wertes eines Energieeintragsparameters die Intensitätsverteilung innerhalb eines zur Zufuhr der Strahlungsenergie zum Strahlungseinwirkbereich dienenden Strahlbündels (22) abgeändert wird, und
eine Steuerdaten-Bereitstellungseinheit (103), die ausgelegt ist, Steuerdaten entsprechend dem durch die Datenmodell-Erzeugungseinheit (102) erzeugten zumindest einen Datenmodell für die Generierung eines Steuerdatensatzes für die additive Herstellvorrichtung bereit zu stellen.

12. Vorrichtung zur computergestützten Ansteuerung einer Anzahl von Energieeintragseinrichtungen einer additiven Herstellvorrichtung zur Herstellung eines dreidimensionalen Objekts mittels derselben,
wobei das Objekt mittels der additiven Herstellvorrichtung hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparametern entlang einer Anzahl von Verfestigungsbahnen abgetastet werden,
wobei die Vorrichtung so ausgelegt ist, dass ein Verfestigen des Aufbaumaterials durch Bewegen zumindest eines Strahlungseinwirkbereichs entlang zumindest einer Verfestigungsbahn so stattfindet, dass während einer Änderung des Geschwindigkeitsvektors der Bewegung eines Strahlungseinwirkbereichs auf dem Aufbaumaterial entlang der Verfestigungsbahn eine zumindest einmalige Abänderung zumindest eines Wertes eines Energieeintragsparameters aus dem Satz von Energieeintragsparameterwerten spezifiziert ist
**dadurch gekennzeichnet, dass**
durch die Abänderung zumindest eines Wertes eines Energieeintragsparameters die Intensitätsverteilung innerhalb eines zur Zufuhr der Strahlungsenergie zum Strahlungseinwirkbereich dienenden Strahlbündels (22) abgeändert wird.

13. Additive Herstellvorrichtung zur Herstellung eines dreidimensionalen Objekts, wobei in der additiven Herstellvorrichtung das Objekt hergestellt wird durch Aufbringen eines Aufbaumaterials Schicht auf Schicht und Verfestigen des Aufbaumaterials mittels Zufuhr von Strahlungsenergie zu Stellen in jeder Schicht, die dem Querschnitt des Objekts in dieser Schicht zugeordnet sind, indem diese Stellen mit mindestens einem Strahlungseinwirkbereich gemäß einem Satz von Energieeintragsparametern entlang einer Anzahl von Verfestigungsbahnen abgetastet werden, wobei die additive Herstellvorrichtung aufweist:
eine Schichtaufbringvorrichtung (16), die geeignet ist, eine Schicht eines Aufbaumaterials (15) auf eine bereits vorhandene, bevorzugt bereits selektiv verfestigte, Aufbaumaterialschicht aufzubringen,
eine Energieeintragsvorrichtung (20), die geeignet ist, dem Querschnitt des Objekts in einer Schicht zugeordneten Stellen Strahlungsenergie zuzuführen, indem diese Stellen mit mindestens einem Strahlungseinwirkbereich gemäß einem Satz von Energieeintragsparameterwerten entlang einer Anzahl von Verfestigungsbahnen abgetastet werden,
wobei die additive Herstellvorrichtung eine Vorrichtung nach Anspruch 12 aufweist und/oder mit einer Vorrichtung nach Anspruch 12 signaltechnisch verbunden ist.

14. Computerprogramm, mit Programmcodemitteln, um alle Schritte eines Verfahrens gemäß einem der Ansprüche 1 bis 9 auszuführen, wenn das Computerprogramm mittels eines Datenprozessors, insbesondere eines mit einer additiven Herstellvorrichtung zusammenwirkenden Datenprozessors, ausgeführt wird.

## Claims

1. A computer-assisted method of providing control data for an additive manufacturing apparatus for the manufacturing of a three-dimensional object, wherein the object is manufactured using the additive manufacturing apparatus by applying a building material layer upon layer and solidifying the building material by supplying radiation energy to locations in each layer associated with the cross-section of the object in this layer by scanning these locations with at least one radiation impact region according to a set of energy exposure parameter values along a number of solidification paths,
the method of providing control data comprising:
a first step (S1) of accessing computer-based model data of at least a portion of the object to be manufactured,
a second step (S2) of generating at least one data model of a region of a building material layer to be selectively solidified for the manufacturing of the at least one object portion, wherein in the data model a solidification of the building material by moving at least one radiation impact region along at least one solidification path is specified,
wherein it is specified that during a change of a velocity vector of the movement of a radiation impact region on the building material along the solidification path, at least once at least one value of an energy exposure parameter from the set of energy exposure parameter values is changed,
wherein by changing at least one value of an energy exposure parameter the intensity distribution within a bundle of beams (22) serving for the supply of the radiation energy to the radiation impact region is changed, and
a third step (S3) of providing control data corresponding to the at least one data model generated in the second step (S2) for generating a control data set for the additive manufacturing apparatus.

2. The method according to claim 1, in which it is determined whether a time duration ta of the change of the velocity vector in the movement of the radiation impact region exceeds a predetermined time duration minimum value taₘᵢₙ, and in which a change of at least one energy exposure parameter value is specified only in the case of a determined exceeding of the time duration minimum value taₘᵢₙ.

3. The method according to claim 1 or 2, in which it is determined whether a direction change angle (ϕ) in the movement of the radiation impact region along the solidification path exceeds a predetermined minimum angle ϕₘᵢₙ, and in which a change of at least one energy exposure parameter value is specified only in the case of a determined exceeding of the minimum angle ϕₘᵢₙ.

4. The method according to one of the preceding claims, in which it is determined whether the amount of curvature κ of a route of the radiation impact region along the solidification path exceeds a predetermined minimum curvature κₘᵢₙ, and in which a change of at least one energy exposure parameter value is specified only in the case of a determined exceeding of the minimum curvature κₘᵢₙ.

5. The method according to one of the preceding claims, in which it is specified that the solidification path runs on and/or along at least part of a contour of an object cross-section.

6. The method according to one of claims 1 to 5, wherein the change of the intensity distribution is implemented such that the area of the radiation impact region remains substantially the same.

7. The method according to one of claims 1 to 6, in which
the radiation impact region (70) is divided into at least two radiation impact sub-regions (70a, 70b) and a sub-region velocity vector is assigned to each of the radiation impact sub-regions (70a, 70b), wherein
in the case of different sub-region velocity vectors, a different energy input per unit area in the radiation impact sub-regions (70a, 70b) resulting from these different sub-region velocity vectors is compensated for by assigning different values of at least one energy exposure parameter to the radiation impact sub-regions (70a, 70b).

8. The method according to claim 7, in which the boundary between a radiation impact sub-region and a radiation impact sub-region adjacent thereto is substantially parallel to the direction of the velocity vector of the radiation impact region (70).

9. The method according to one of claims 7 to 8, in which the maximum difference between absolute values of velocities existing between different locations within the radiation impact region during the movement of the radiation impact region (70) is determined at these locations, and compensation is performed only in the case that the maximum difference between the absolute values of the velocities existing within the radiation impact region (70) exceeds a predetermined limit value.

10. An additive manufacturing method for manufacturing a three-dimensional object, wherein the object is manufactured using an additive manufacturing apparatus by applying a building material layer upon layer and solidifying the building material by supplying radiation energy to locations in each layer associated with the cross-section of the object in this layer by scanning these locations with at least one radiation impact region according to a set of energy exposure parameter values along a number of solidification paths,
wherein the process of the additive manufacturing method is controlled by a control data set generated using a method according to one of claims 1 to 9.

11. A device for providing control data for an additive manufacturing apparatus for the manufacturing of a three-dimensional object, wherein the object is manufactured using the additive manufacturing apparatus by applying a building material layer upon layer and solidifying the building material by supplying radiation energy to locations in each layer associated with the cross-section of the object in this layer by scanning these locations with at least one radiation impact region according to a set of energy exposure parameter values along a number of solidification paths,
the apparatus for providing control data comprising:
a data access unit (101) configured to access computer-based model data of at least a portion of the object to be manufactured,
a data model generating unit (102) configured to generate at least one data model of a region of a building material layer to be selectively solidified for the manufacturing of the at least one object portion, wherein in the data model a solidification of the building material by moving at least one radiation impact region along at least one solidification path is specified,
wherein during a change of the velocity vector of the movement of a radiation impact region on the building material along the solidification path, at least a onetime change of at least one value of an energy exposure parameter from the set of energy exposure parameter values is specified,
wherein by changing at least one value of an energy exposure parameter the intensity distribution within a bundle of beams (22) serving for the supply of the radiation energy to the radiation impact region is changed, and
a control data provisioning unit (103) configured to provide control data corresponding to the at least one data model generated by the data model generating unit (102) for generating a control data set for the additive manufacturing apparatus.

12. A device for computer-assisted control of a number of energy input devices of an additive manufacturing apparatus for the manufacturing of a three-dimensional object using the same,
wherein the object is manufactured using the additive manufacturing apparatus by applying a building material layer upon layer and solidifying the building material by supplying radiation energy to locations in each layer associated with the cross-section of the object in this layer by scanning these locations with at least one radiation impact region according to a set of energy exposure parameters along a number of solidification paths,
wherein the apparatus is configured to solidify the building material by moving at least one radiation impact region along at least one solidification path in such a way that during a change of the velocity vector of the movement of a radiation impact region on the building material along the solidification path, at least a onetime change of at least one value of an energy exposure parameter from the set of energy exposure parameter values is specified,
**characterized in that** by changing at least one value of an energy exposure parameter the intensity distribution within a bundle of beams (22) serving for the supply of the radiation energy to the radiation impact region is changed.

13. An additive manufacturing apparatus for manufacturing a three-dimensional object, wherein the object is manufactured in the additive manufacturing apparatus by applying a building material layer upon layer and solidifying the building material by supplying radiation energy to locations in each layer associated with the cross-section of the object in this layer by scanning these locations with at least one radiation impact region according to a set of energy exposure parameters along a number of solidification paths, the additive manufacturing apparatus comprising:
a layer application device (16) configured to apply a layer of a building material (15) upon a building material layer that is already present and preferably already selectively solidified,
an energy input device (20) configured to supply radiation energy to locations associated with the cross-section of the object in a layer by scanning these locations with at least one radiation impact region according to a set of energy exposure parameter values along a number of solidification paths,
wherein the additive manufacturing apparatus comprises a device according to claim 12 and/or is signal-connected to a device according to claim 12.

14. A computer program, comprising program code means for executing all steps of a method according to one of claims 1 to 9 when the computer program is executed by means of a data processor, in particular a data processor cooperating with an additive manufacturing apparatus.

## Revendications

1. Procédé assisté par ordinateur pour fournir des données de commande à un appareil de fabrication additive pour fabriquer un objet tridimensionnel, l'objet étant fabriqué par l'appareil de fabrication additive en appliquant un matériau de construction couche par couche et en solidifiant le matériau de construction par application d'énergie de radiation à des positions dans chaque couche qui sont associées à la section transversale de l'objet dans cette couche, en scannant ces positions par au moins une zone d'impact de radiation selon un ensemble de valeurs de paramètres d'introduction d'énergie le long d'un nombre de trajectoires de solidification,
dans lequel le procédé pour fournir des données de commande comprend :
une première étape (S1) d'accès à des données de modèle informatique d'au moins une partie de l'objet à fabriquer,
une deuxième étape (S2) de création d'au moins un modèle de données d'une zone d'une couche de matériau de construction à solidifier sélectivement pour fabriquer ladite au moins une partie d'objet, une solidification du matériau de construction par déplacement d'au moins une zone d'impact de radiation le long d'au moins une trajectoire de solidification étant spécifiée dans le modèle de données,
dans lequel il est spécifié que, pendant une modification d'un vecteur de vitesse du mouvement d'une zone d'impact de radiation sur le matériau de construction le long de la trajectoire de solidification, une modification au moins unique d'au moins une valeur d'un paramètre d'introduction d'énergie parmi l'ensemble de valeurs de paramètre d'introduction d'énergie est effectuée,
dans lequel par la modification d'au moins une valeur d'un paramètre d'introduction d'énergie, la distribution d'intensité à l'intérieur d'un faisceau de radiation (22) servant à fournir l'énergie de radiation à la zone d'impact de radiation est modifiée, et
une troisième étape (S3) dans laquelle des données de commande correspondant à l'au moins un modèle de données généré dans la deuxième étape (S2) sont fournies pour la génération d'un ensemble de données de commande pour le dispositif de fabrication additive.

2. Procédé selon la revendication 1, dans lequel il est déterminé si une durée ta du changement du vecteur de vitesse lors du déplacement de la zone d'impact de radiation dépasse une valeur minimale de durée prédéterminée taₘᵢₙ, et dans lequel une modification d'au moins une valeur de paramètre d'introduction d'énergie est spécifiée uniquement dans le cas où il est déterminé que la valeur minimale de durée taₘᵢₙ est dépassée.

3. Procédé selon la revendication 1 ou 2, dans lequel il est déterminé si un angle de changement de direction (ϕ) dépasse un angle minimal prédéterminé ϕₘᵢₙ lors du déplacement de la zone d'impact de radiation le long de la trajectoire de solidification, et dans lequel une modification d'au moins une valeur de paramètre d'introduction d'énergie est spécifiée uniquement dans le cas où il est déterminé que l'angle minimal ϕₘᵢₙ est dépassé.

4. Procédé selon l'une quelconque des revendications précédentes, dans lequel il est déterminé si la valeur de la courbure κ d'un trajet de la zone d'impact de radiation le long de la trajectoire de solidification dépasse une courbure minimale κₘᵢₙ prédéterminée, et dans lequel une modification d'au moins une valeur de paramètre d'introduction d'énergie est spécifiée uniquement dans le cas où il est déterminé que la courbure minimale κₘᵢₙ est dépassée.

5. Procédé selon l'une quelconque des revendications précédentes, dans lequel il est spécifié que la trajectoire de solidification s'étend sur et/ou le long d'au moins une partie d'un contour d'une section transversale d'un objet.

6. Procédé selon l'une des revendications 1 à 5, dans lequel la modification de la distribution d'intensité est effectuée de telle sorte que la surface de la zone d'impact de radiation reste sensiblement la même.

7. Procédé selon l'une quelconque des revendications 1 à 6, dans lequel
la zone d'impact de radiation (70) est divisée en au moins deux sous-zones d'impact de radiation (70a, 70b) et un vecteur de vitesse de sous-zone est associé à chacune des sous-zones d'impact de radiation (70a, 70b), et dans lequel,
dans le cas de vecteurs de vitesse de sous-zone différents, une introduction d'énergie différente par unité de surface dans les sous-zones d'impact de radiation (70a, 70b) résultant de ces vecteurs de vitesse de sous-zone différents est compensé en attribuant aux sous-zones d'impact de radiation (70a, 70b) des valeurs différentes d'au moins un paramètre d'introduction d'énergie.

8. Procédé selon la revendication 7, dans lequel la frontière entre une sous-zone d'impact de radiation et une sous-zone d'impact de radiation adjacente à celle-ci est sensiblement parallèle à la direction du vecteur de vitesse de la zone d'impact de radiation (70).

9. Procédé selon l'une quelconque des revendications 7 à 8, dans lequel la différence maximale entre les valeurs de vitesse à différentes positions à l'intérieur de la zone d'impact de radiation (70) pendant le déplacement de la zone d'impact de radiation est déterminée pour ces positions et une compensation est effectuée uniquement dans le cas où la différence maximale entre les valeurs de vitesse à l'intérieur de la zone d'impact de radiation (70) dépasse une valeur limite prédéterminée.

10. Procédé de fabrication additive pour fabriquer un objet tridimensionnel, dans lequel l'objet est fabriqué au moyen d'un dispositif de fabrication additive en appliquant un matériau de construction couche par couche et en solidifiant le matériau de construction par application d'énergie de radiation à des positions dans chaque couche associées à la section transversale de l'objet dans cette couche, en scannant ces positions par au moins une zone d'impact de radiation selon un ensemble de valeurs de paramètres d'introduction d'énergie le long d'un nombre de trajectoires de solidification,
dans lequel le déroulement du procédé de fabrication additive est commandé par un ensemble de données de commande généré en utilisant un procédé selon l'une quelconque des revendications 1 à 9.

11. Dispositif pour fournir des données de commande à un appareil de fabrication additive pour fabriquer un objet tridimensionnel, l'objet étant fabriqué par l'appareil de fabrication additive en appliquant un matériau de construction couche par couche et en solidifiant le matériau de construction par application d'énergie de radiation à des positions dans chaque couche qui sont associées à la section transversale de l'objet dans cette couche, en scannant ces positions par au moins une zone d'impact de radiation selon un ensemble de valeurs de paramètres d'introduction d'énergie le long d'un certain nombre de trajectoires de solidification,
dans lequel le dispositif pour fournir des données de commande comprend :
une unité d'accès aux données (101) adaptée pour accéder à des données de modèle informatique d'au moins une partie de l'objet à fabriquer,
une unité de génération de modèle de données (102) adaptée pour générer au moins un modèle de données d'une zone d'une couche de matériau de construction à solidifier de manière sélective pour fabriquer ladite au moins une partie d'objet, une solidification du matériau de construction par déplacement d'au moins une zone d'impact de radiation le long d'au moins une trajectoire de solidification étant spécifiée dans le modèle de données,
dans lequel, pendant une modification du vecteur de vitesse du mouvement d'une zone d'impact de radiation sur le matériau de construction le long de la trajectoire de consolidation, une modification au moins unique d'au moins une valeur d'un paramètre d'introduction d'énergie parmi l'ensemble de valeurs de paramètres d'introduction d'énergie est spécifiée,
dans lequel, par la modification d'au moins une valeur d'un paramètre d'introduction d'énergie, la distribution d'intensité à l'intérieur d'un faisceau de radiation (22) servant à fournir l'énergie de radiation à la zone d'impact de radiation est modifiée, et
une unité de fourniture des données de commande (103) adaptée pour fournir des données de commande qui correspondent à l'au moins un modèle de données générées par l'unité de génération de modèle de données (102) pour la génération d'un ensemble de données de commande pour le dispositif de fabrication additive.

12. Dispositif pour la commande assistée par ordinateur d'une pluralité de dispositifs d'introduction d'énergie d'un dispositif de fabrication additive pour la fabrication d'un objet tridimensionnel au moyen de celui-ci,
dans lequel l'objet est fabriqué au moyen de l'appareil de fabrication additive en appliquant un matériau de construction couche par couche et en solidifiant le matériau de construction par application d'énergie de radiation à des positions dans chaque couche qui sont associées à la section transversale de l'objet dans cette couche, en scannant ces positions par au moins une zone d'impact de radiation selon un ensemble de paramètres d'introduction d'énergie le long d'un nombre de trajectoires de solidification,
dans lequel l'appareil est conçu pour solidifier le matériau de construction en déplaçant au moins une zone d'impact de radiation le long d'au moins une trajectoire de solidification de telle sorte que, pendant une modification du vecteur de vitesse du mouvement d'une zone d'impact de radiation sur le matériau de construction le long de la trajectoire de solidification, une modification au moins unique d'au moins une valeur d'un paramètre d'application d'énergie parmi l'ensemble de valeurs de paramètres d'introduction est spécifiée,
**caractérisé en ce que**
par la modification d'au moins une valeur d'un paramètre d'introduction d'énergie, la distribution d'intensité à l'intérieur d'un faisceau de radiation (22) servant à fournir l'énergie de radiation à la zone d'impact de radiation est modifiée.

13. Dispositif de fabrication additive pour fabriquer un objet tridimensionnel, l'objet étant fabriqué en appliquant un matériau de construction couche par couche et en solidifiant le matériau de construction par application d'énergie de radiation à des positions dans chaque couche qui sont associées à la section transversale de l'objet dans cette couche, en scannant ces positions par au moins une zone d'impact de radiation selon un ensemble de paramètres d'introduction d'énergie le long d'un nombre de trajectoires de solidification, le dispositif de fabrication additive comprenant :
un dispositif d'application de couche (16) adapté pour appliquer une couche d'un matériau de construction (15) sur une couche de matériau de construction déjà présente, de préférence déjà solidifiée de manière sélective,
un dispositif d'introduction d'énergie (20) adapté pour introduire de l'énergie de radiation à des positions dans chaque couche qui sont associées à la section transversale de l'objet, en scannant ces positions par au moins une zone d'impact de radiation selon un ensemble de valeurs de paramètres d'introduction d'énergie le long d'un nombre de trajectoires de solidification,
dans lequel le dispositif de fabrication additive comprend un dispositif selon la revendication 12 et/ou est relié par signal à un dispositif selon la revendication 12.

14. Programme d'ordinateur comprenant des moyens de code de programme pour exécuter toutes les étapes d'un procédé selon l'une quelconque des revendications 1 à 9, lorsque le programme d'ordinateur est exécuté au moyen d'un processeur de données, en particulier un processeur de données coopérant avec un dispositif de fabrication additive.
